# EUROPEAN PATENT APPLICATION

(11) **EP 4 744 853 A1**
(43) Date of publication of application: **20.05.2026**
(21) Application number: 24839776.2
(22) Date of filing: 10.07.2024
(51) Int. Cl.: B29B 17/02, B29B 17/00, B29B 17/04, B29C 45/00, C08G 64/04, C08J 11/16, G01N 21/65

(54) **RECYCLED RESIN PRODUCTION METHOD**

(30) Priority: 12.07.2023 JP 2023114533; 20.09.2023 JP 2023153955
(71) Applicant: MITSUBISHI GAS CHEMICAL COMPANY, INC., Chiyoda-ku Tokyo 100-8324 (JP)
(72) Inventor: KATO, Noriyuki, Tokyo 100-8324 (JP); NISHIMORI, Katsushi, Tokyo 125-8601 (JP); MOTEGI, Atsushi, Tokyo 125-8601 (JP); ISHIHARA, Kentaro, Tokyo 100-8324 (JP); OCHI, Noriaki, Tokyo 125-8601 (JP); MATSUMOTO, Mutsumi, Tokyo 125-8601 (JP); SATO, Atsuhiro, Tokyo 125-8601 (JP)
(74) Representative: Hoffmann Eitle
(86) International application number: PCT/JP2024/024866
(87) International publication number: WO 2025/013886

(57) **Abstract**

Provided is a method for producing a recycled resin, which is excellent in terms of efficiency in recycling molding waste products.

A method for producing a recycled resin,
the method comprising:
a step of irradiating a laser light to a molding waste product consisting of a thermoplastic resin, identifying the type of the thermoplastic resin of the molding waste product based on a Raman scattering light scattered from the molding waste product, and separating and recovering the molding waste product; and
a step of obtaining a recycled resin from the separated and recovered molding waste product, wherein
the thermoplastic resin comprises at least one selected from a constituent unit (A) derived from a monomer represented by the following general formula (1), a constituent unit (B) derived from a monomer represented by the following general formula (2), a constituent unit (C) derived from a monomer represented by the following general formula (3), a constituent unit (D) derived from a monomer represented by the following general formula (4), and a constituent unit (E) derived from a monomer represented by the following general formula (5):

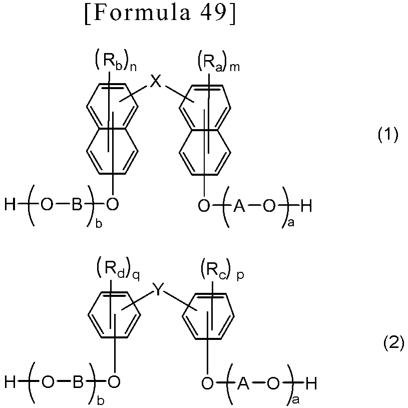

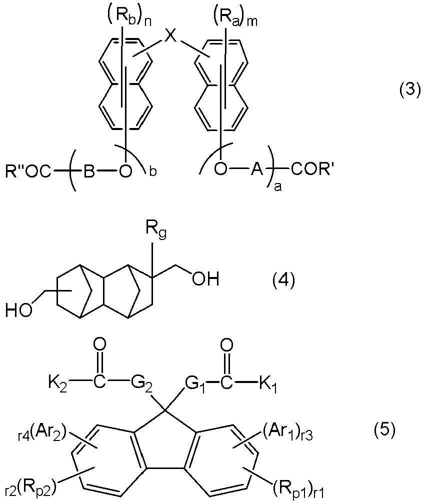

## Description

### Technical Field

The present invention relates to a method for producing a recycled resin, and the like.

### Background Art

In recent years, concerns about deterioration of the natural environment and an increase in waste emissions have grown, and efforts to recycle plastic products have become even stronger towards achieving realization of a recycling-oriented society.

A typical method for producing plastic products may be an injection molding method. Specifically, a heated and molten resin is poured into a mold and is then cooled, so that a plastic product (molded body) molded into a predetermined shape can be produced. At this time, according to the injection molding method, molding waste products derived from the passage of the molten resin in the mold may also be generated along with the plastic product. For example, when a molded body is obtained, molding waste products such as sprues, runners, excess parts called ears that occur on both ends of a film or a sheet, and non-standard products are generated. Such molding waste products may become an extremely large amount when plastic products are industrially produced, and thus, the recycling of molding waste products is being considered.

For example, Patent Literature 1 describes an invention relating to a method for producing a recycled thermoplastic resin molded product, the method comprising crushing sprue runners (molding waste products) and/or molding defective products generated during the molding process of a thermoplastic resin molded product, then mixing the resulting product into a new thermoplastic resin, and then injection-molding a thermoplastic resin molded product again, using the obtained mixture. The above-described invention is characterized in that the molding is performed by a gas-assisted method under the same molding conditions as those for molding a new thermoplastic resin, even under circumstances in which the melt flow characteristics of the mixture change. Patent Literature 1 describes that, according to the invention described in Patent Literature 1, a recycled resin molded product with a stable dimension and a high commercial value, which is free of defects such as sink marks, distortion, and warping, can be obtained.

### Citation List

### Patent Literature

Patent Literature 1: JP Patent Publication (Kokai) No. 2006-256339 A

### Summary of Invention

When a molding waste product of thermoplastic resin is recycled, a recycling processing is performed on a waste composition obtained by recovering the resulting molding waste product. It is desirable to recover the molding waste product according to the type of a resin, but the waste composition may contain multiple types of resins in some cases. As a result, if the waste composition is used as is in the recycling processing, the recycling efficiency and the quality of the recycled resin are likely to be reduced.

Thus, the present invention provides a means for improving recycling efficiency and/or the quality of the obtained recycled resin in a method for producing a recycled resin from molding waste products.

The present invention is, for example, as follows.

[1] A method for producing a recycled resin,
   the method comprising:
   a step of irradiating a laser light to a molding waste product consisting of a thermoplastic resin, identifying the type of the thermoplastic resin of the molding waste product based on a Raman scattering light scattered from the molding waste product, and separating and recovering the molding waste product; and
   a step of obtaining a recycled resin from the separated and recovered molding waste product, wherein
   the thermoplastic resin comprises at least one selected from a constituent unit (A) derived from a monomer represented by the following general formula (1), a constituent unit (B) derived from a monomer represented by the following general formula (2), a constituent unit (C) derived from a monomer represented by the following general formula (3), a constituent unit (D) derived from a monomer represented by the following general formula (4), and a constituent unit (E) derived from a monomer represented by the following general formula (5): 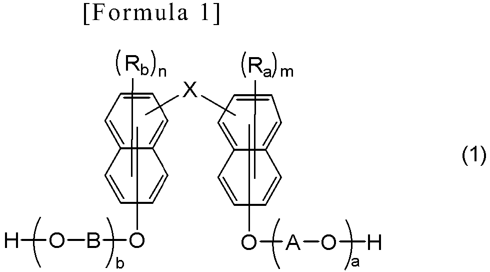
   wherein, in the formula (1),
   Rₐ and R_{b} are each independently selected from the group consisting of a hydrogen atom, a halogen atom, an alkyl group containing 1 to 20 carbon atoms and optionally being substituted, an alkoxy group containing 1 to 20 carbon atoms and optionally being substituted, a cycloalkyl group containing 5 to 20 carbon atoms and optionally being substituted, a cycloalkoxy group containing 5 to 20 carbon atoms and optionally being substituted, and an aryl group containing 6 to 20 carbon atoms and optionally being substituted, a heteroaryl group containing 3 to 20 carbon atoms and optionally being substituted, which comprises one or more heterocyclic atoms selected from O, N and S, an aryloxy group containing 6 to 20 carbon atoms and optionally being substituted, and - C≡C-Rₕ, wherein
   Rₕ represents an aryl group containing 6 to 20 carbon atoms and optionally being substituted, or a heteroaryl group containing 3 to 20 carbon atoms and optionally being substituted, which comprises one or more heterocyclic atoms selected from O, N and S,
   X represents a single bond or a fluorene group optionally being substituted,
   A and B each independently represent an alkylene group containing 1 to 5 carbon atoms and optionally being substituted,
   m and n each independently represent an integer of 0 to 6, and
   a and b each independently represent an integer of 0 to 10, 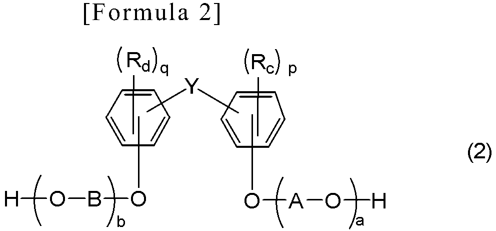
   wherein, in the formula (2),
   R_{c} and R_{d} are each independently selected from the group consisting of a hydrogen atom, a halogen atom, an alkyl group containing 1 to 20 carbon atoms and optionally being substituted, an alkoxy group containing 1 to 20 carbon atoms and optionally being substituted, a cycloalkyl group containing 5 to 20 carbon atoms and optionally being substituted, a cycloalkoxy group containing 5 to 20 carbon atoms and optionally being substituted, and an aryl group containing 6 to 20 carbon atoms and optionally being substituted,
   Y is selected from the group consisting of a single bond, a fluorene group optionally being substituted, -CR₂₁R₂₂-, -S-, -S(=O)-, -(CH₂)ᵣ-, -O-, -(CH₂)ᵣ-(SiR₂₃R₂₄-O)ₛ-SiR₂₃R₂₄-(CH₂)ᵣ-, and -CR₂₅R₂₆-Ph-CR₂₅R₂₆-, wherein
   R₂₁, R₂₂, R₂₃, R₂₄, R₂₅ and R₂₆ are each independently represent a hydrogen atom, a halogen atom, an alkyl group containing 1 to 20 carbon atoms and optionally being substituted, or an aryl group containing 6 to 30 carbon atoms and optionally being substituted, or R₆₁ and R₆₂, or R₇₁ and R₇₂ bind to each other to form a carbon ring or heteroring, containing 1 to 20 carbon atoms and optionally being substituted,
   Ph represents a phenyl group,
   r and s each independently represent an integer of 0 to 5000,
   A and B each independently represent an alkylene group containing 1 to 5 carbon atoms and optionally being substituted,
   p and q each independently represent an integer of 0 to 4, and
   a and b each independently represent an integer of 0 to 10, 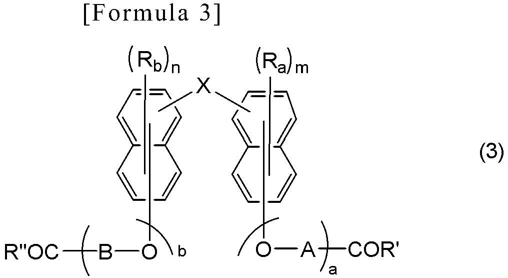
   wherein, in the formula (3),
   Rₐ and R_{b} are each independently selected from the group consisting of a hydrogen atom, a halogen atom, an alkyl group containing 1 to 20 carbon atoms and optionally being substituted, an alkoxy group containing 1 to 20 carbon atoms and optionally being substituted, a cycloalkyl group containing 5 to 20 carbon atoms and optionally being substituted, a cycloalkoxy group containing 5 to 20 carbon atoms and optionally being substituted, and an aryl group containing 6 to 20 carbon atoms and optionally being substituted, a heteroaryl group containing 3 to 20 carbon atoms and optionally being substituted, which comprises one or more heterocyclic atoms selected from O, N and S, an aryloxy group containing 6 to 20 carbon atoms and optionally being substituted, and - C≡C-Rₕ, wherein
   Rₕ represents an aryl group containing 6 to 20 carbon atoms and optionally being substituted, or a heteroaryl group containing 3 to 20 carbon atoms and optionally being substituted, which comprises one or more heterocyclic atoms selected from O, N and S,
   X represents a single bond or a fluorene group optionally being substituted,
   A and B each independently represent an alkylene group containing 1 to 5 carbon atoms and optionally being substituted,
   m and n each independently represent an integer of 0 to 6,
   a and b each independently represent an integer of 0 to 10, and
   R' and R" are each independently selected from the group consisting of a hydroxy group, a halogen atom, an alkoxy group containing 1 to 20 carbon atoms and optionally being substituted, and an aryloxy group containing 6 to 20 carbon atoms and optionally being substituted, 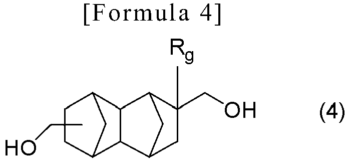
   wherein, in the formula (4), R_{g} each independently represents a hydrogen atom or an alkyl group containing 1 to 3 carbon atoms, and 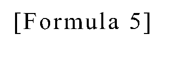 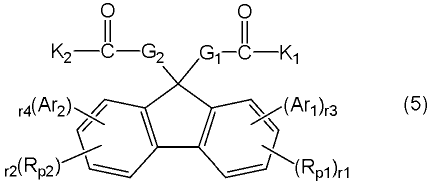
   wherein, in the formula (5),
   G₁ and G₂ each independently represent an alkylene group containing 1 to 8 carbon atoms and optionally being substituted,
   K₁ and K₂ each independently represent a hydroxy group, an alkoxy group or a halogen atom,
   Rₚ₁ and Rₚ₂ each independently represent a halogen atom, a cyano group, or an alkyl group containing 1 to 8 carbon atoms and optionally being substituted,
   Ar₁ and Ar₂ each independently represent a phenyl group or a naphthyl group, which may optionally be substituted,
   r₁ and r₂ each independently represent an integer of 0 to 2, and
   r₃ and r₄ each independently represent an integer of 0 or 1.
[2] The production method according to the above [1], wherein the thermoplastic resin comprises at least one selected from the group consisting of the constituent unit (A) derived from the monomer represented by the above general formula (1), the constituent unit (B) derived from the monomer represented by the above general formula (2), the constituent unit (C) derived from the monomer represented by the above general formula (3), and the constituent unit (D) derived from the monomer represented by the above general formula (4).
[3] The production method according to the above [2], wherein the thermoplastic resin is selected from the group consisting of a resin consisting of the above constituent unit (A) and the above constituent unit (B), a resin consisting of the above constituent unit (B) and the above constituent unit (C), a resin consisting of the above constituent unit (B) and the above constituent unit (D), a resin consisting of the above constituent unit (A), a resin consisting of the above constituent unit (B), a resin consisting of the above constituent unit (C), and a resin consisting of the above constituent unit (D).
[4] The production method according to the above [2], wherein the thermoplastic resin is represented by any of the following formula (I-1), (I-2), (I-3), (II-1), (11-2), (II-3), (11-4), (II-5), or (II-6): 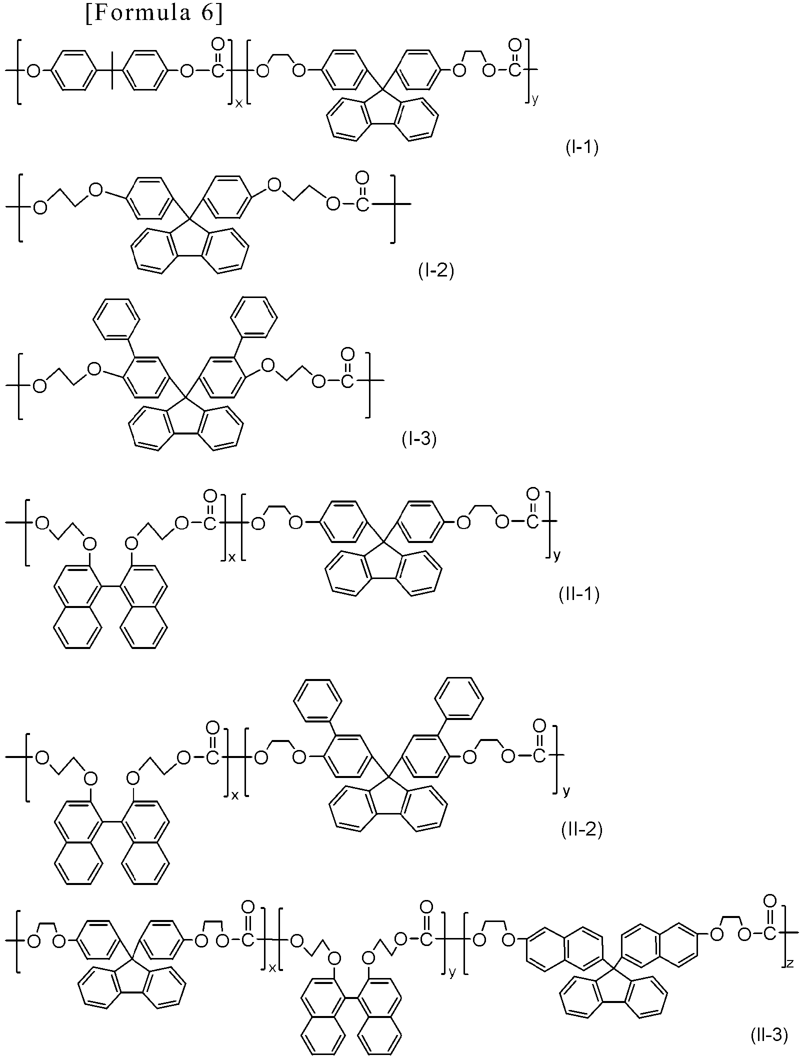 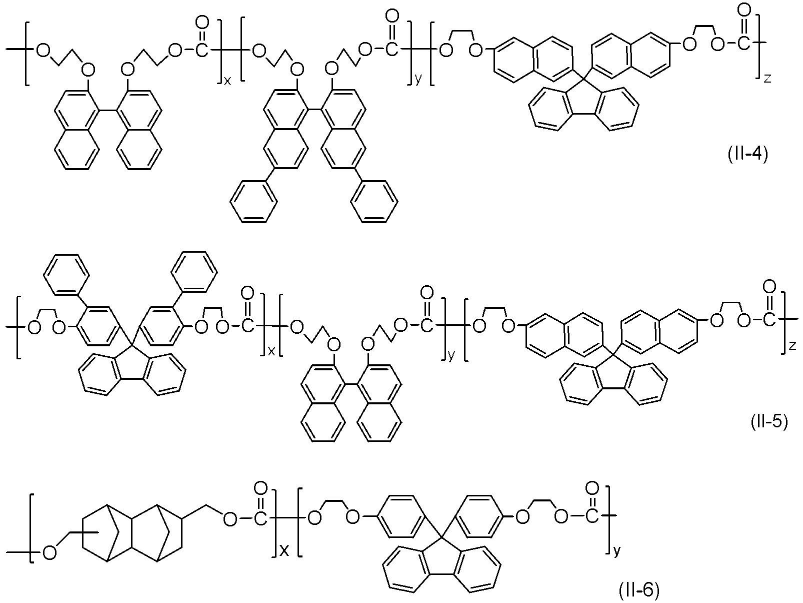 wherein x, y, and z each represent the number of repeating units.
[5] The production method according to the above [1], wherein the thermoplastic resin is selected from the group consisting of:
   (III-1) a resin comprising a constituent unit represented by the following formula (iii-a1), a constituent unit represented by the following formula (iii-a2), a constituent unit represented by the following formula (iii-a3), and a constituent unit represented by the following formula (iii-a4);
   (III-2) a resin comprising a constituent unit represented by the following formula (iii-a1), a constituent unit represented by the following formula (iii-a2), a constituent unit represented by the following formula (iii-a4), and a constituent unit represented by the following formula (iii-a5); and
   (III-3) a resin comprising a constituent unit represented by the following formula (iii-a1), a constituent unit represented by the following formula (iii-a4), and a constituent unit represented by the following formula (iii-a6): 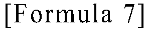 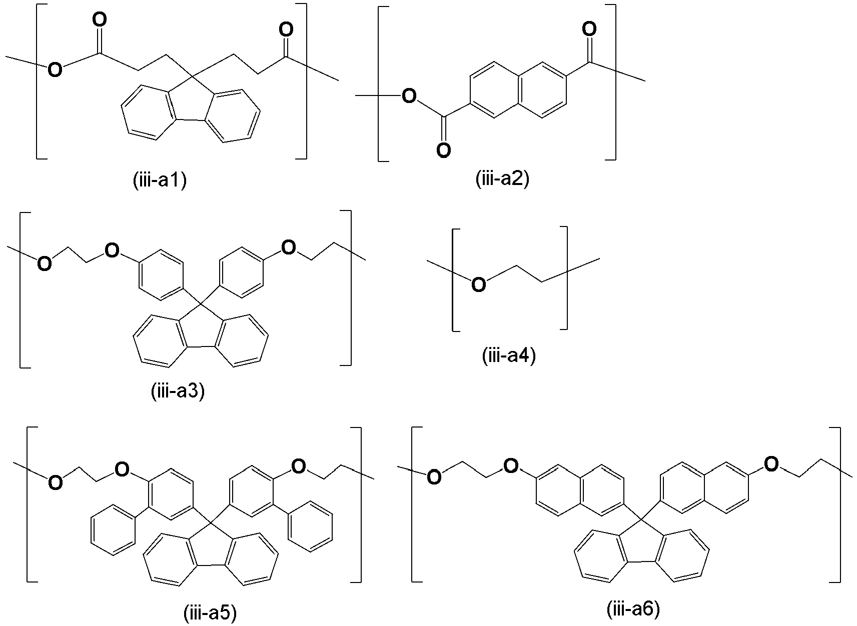
[6] The production method according to any one of the above [1] to [5], wherein the molding waste product comprises a sprue part and/or a runner part discharged after molding an optical material.
[7] The production method according to any one of the above [1] to [6], wherein the separation and recovery step is continuously carried out on a conveyor, and the molding waste product is supplied onto the conveyor at a speed of 0.5 to 5 pieces/second.
[8] The production method according to any one of the above [1] to [7], wherein
   the separation and recovery step comprises:
   collecting the molding waste product to be recovered by spraying compressed air, and/or
   removing the molding waste product not to be recovered by spraying compressed air.
[9] The production method according to any one of the above [1] to [8], comprising a step of supplying a waste composition containing the molding waste product to a vibration transport floor, and vibration-transporting the waste composition.
[10] The production method according to the above [9], comprising a step of supplying the molding waste products onto the conveyor at equal intervals in the separation and recovery step.
[11] The production method according to the above [10], wherein
   the molding waste product comprises an axial sprue part and two or more runner parts that extend evenly from the lower portion of the axis in the circumferential direction, and
   the molding waste products are arranged in aligned orientation, so that the tips of the axial sprue parts face upward.
[12] A method for separating and recovering a molding waste product, wherein the method comprises:
   a step of irradiating a laser light to a molding waste product consisting of a thermoplastic resin, identifying the type of the thermoplastic resin of the molding waste product based on a Raman scattering light scattered from the molding waste product, and separating and recovering the molding waste product, wherein
   the thermoplastic resin comprises at least one selected from a constituent unit (A) derived from a monomer represented by the following general formula (1), a constituent unit (B) derived from a monomer represented by the following general formula (2), a constituent unit (C) derived from a monomer represented by the following general formula (3), a constituent unit (D) derived from a monomer represented by the following general formula (4), and a constituent unit (E) derived from a monomer represented by the following general formula (5): 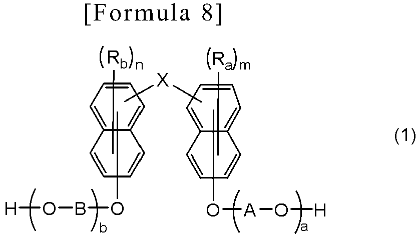
   wherein, in the formula (1),
   Rₐ and R_{b} are each independently selected from the group consisting of a hydrogen atom, a halogen atom, an alkyl group containing 1 to 20 carbon atoms and optionally being substituted, an alkoxy group containing 1 to 20 carbon atoms and optionally being substituted, a cycloalkyl group containing 5 to 20 carbon atoms and optionally being substituted, a cycloalkoxy group containing 5 to 20 carbon atoms and optionally being substituted, and an aryl group containing 6 to 20 carbon atoms and optionally being substituted, a heteroaryl group containing 3 to 20 carbon atoms and optionally being substituted, which comprises one or more heterocyclic atoms selected from O, N and S, an aryloxy group containing 6 to 20 carbon atoms and optionally being substituted, and - C≡C-Rₕ, wherein
   Rₕ represents an aryl group containing 6 to 20 carbon atoms and optionally being substituted, or a heteroaryl group containing 3 to 20 carbon atoms and optionally being substituted, which comprises one or more heterocyclic atoms selected from O, N and S,
   X represents a single bond or a fluorene group optionally being substituted,
   A and B each independently represent an alkylene group containing 1 to 5 carbon atoms and optionally being substituted,
   m and n each independently represent an integer of 0 to 6, and
   a and b each independently represent an integer of 0 to 10, 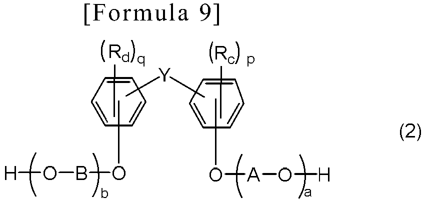
   wherein, in the formula (2),
   R_{c} and R_{d} are each independently selected from the group consisting of a hydrogen atom, a halogen atom, an alkyl group containing 1 to 20 carbon atoms and optionally being substituted, an alkoxy group containing 1 to 20 carbon atoms and optionally being substituted, a cycloalkyl group containing 5 to 20 carbon atoms and optionally being substituted, a cycloalkoxy group containing 5 to 20 carbon atoms and optionally being substituted, and an aryl group containing 6 to 20 carbon atoms and optionally being substituted,
   Y is selected from the group consisting of a single bond, a fluorene group optionally being substituted, -CR₂₁R₂₂-, -S-, -S(=O)-, -(CH₂)ᵣ-, -O-, -(CH₂)ᵣ-(SiR₂₃R₂₄-O)ₛ-SiR₂₃R₂₄-(CH₂)ᵣ-, and -CR₂₅R₂₆-Ph-CR₂₅R₂₆-, wherein
   R₂₁, R₂₂, R₂₃, R₂₄, R₂₅ and R₂₆ are each independently represent a hydrogen atom, a halogen atom, an alkyl group containing 1 to 20 carbon atoms and optionally being substituted, or an aryl group containing 6 to 30 carbon atoms and optionally being substituted, or R₆₁ and R₆₂, or R₇₁ and R₇₂ bind to each other to form a carbon ring or heteroring, containing 1 to 20 carbon atoms and optionally being substituted,
   Ph represents a phenyl group,
   r and s each independently represent an integer of 0 to 5000,
   A and B each independently represent an alkylene group containing 1 to 5 carbon atoms and optionally being substituted,
   p and q each independently represent an integer of 0 to 4, and
   a and b each independently represent an integer of 0 to 10, 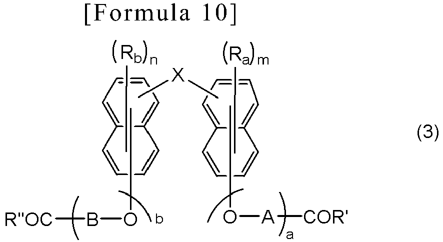
   wherein, in the formula (3),
   Rₐ and R_{b} are each independently selected from the group consisting of a hydrogen atom, a halogen atom, an alkyl group containing 1 to 20 carbon atoms and optionally being substituted, an alkoxy group containing 1 to 20 carbon atoms and optionally being substituted, a cycloalkyl group containing 5 to 20 carbon atoms and optionally being substituted, a cycloalkoxy group containing 5 to 20 carbon atoms and optionally being substituted, and an aryl group containing 6 to 20 carbon atoms and optionally being substituted, a heteroaryl group containing 3 to 20 carbon atoms and optionally being substituted, which comprises one or more heterocyclic atoms selected from O, N and S, an aryloxy group containing 6 to 20 carbon atoms and optionally being substituted, and-C≡C-Rₕ, wherein
   Rₕ represents an aryl group containing 6 to 20 carbon atoms and optionally being substituted, or a heteroaryl group containing 3 to 20 carbon atoms and optionally being substituted, which comprises one or more heterocyclic atoms selected from O, N and S,
   X represents a single bond or a fluorene group optionally being substituted,
   A and B each independently represent an alkylene group containing 1 to 5 carbon atoms and optionally being substituted,
   m and n each independently represent an integer of 0 to 6,
   a and b each independently represent an integer of 0 to 10, and
   R' and R" are each independently selected from the group consisting of a hydrogen atom, a hydroxy group, an alkoxy group containing 1 to 20 carbon atoms and optionally being substituted, and an aryloxy group containing 6 to 20 carbon atoms and optionally being substituted, 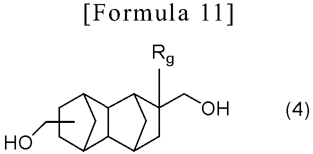
   wherein, in the formula (4), R_{g} each independently represents a hydrogen atom or an alkyl group containing 1 to 3 carbon atoms, and 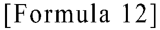 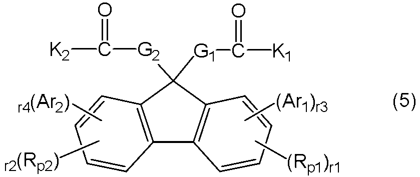
   wherein, in the formula (5),
   G₁ and G₂ each independently represent an alkylene group containing 1 to 8 carbon atoms and optionally being substituted,
   K₁ and K₂ each independently represent a hydroxy group, an alkoxy group or a halogen atom,
   Rₚ₁ and Rₚ₂ each independently represent a halogen atom, a cyano group, or an alkyl group containing 1 to 8 carbon atoms and optionally being substituted,
   Ar₁ and Ar₂ each independently represent a phenyl group or a naphthyl group, which may optionally be substituted,
   r₁ and r₂ each independently represent an integer of 0 to 2, and
   r₃ and r₄ each independently represent an integer of 0 or 1.

According to the present invention, it is possible to produce a recycled resin from a molding waste product with excellent recycling efficiency and/or with high quality.

### Brief Description of Drawings

[Figure 1] Figure 1 is a view schematically showing one embodiment of a mold.
[Figure 2] Figure 2 is a view schematically showing one embodiment after injection molding.
[Figure 3] Figure 3 is a schematic view of a one-piece product of a plastic product and a molding waste product obtained after injection molding.
[Figure 4] Figure 4 is a view schematically showing a method for separating and recovering a molding waste product in a separation and recovery step according to one embodiment.
[Figure 5] Figure 5 is a view schematically showing a method for separating and recovering a molding waste product in a separation and recovery step according to another embodiment.
[Figure 6] Figure 6A is a view schematically showing a form in which molding waste products each comprising an axial sprue part 7 and runner parts 8 are arranged in a state where the orientations of the axial parts (sprue parts) are not aligned; and Figure 6B is a view schematically showing a form in which molding waste products each comprising an axial sprue part 7 and runner parts 8 are arranged in a state in which the orientations of the axial parts (sprue part 7) are aligned so that they extend upward.

### Description of Embodiments

Hereinafter, the meanings of the terms and the like described in the present description will be explained below, and the present invention will be described in detail.

In the present description, the "halogen atom" means a fluorine atom (F), a chlorine atom (Cl), a bromine atom (Br), and an iodine atom (I).

Examples of the alkyl group containing 1 to 20 carbon atoms may include a methyl group, an ethyl group, a propyl group, an isopropyl group, a butyl group, an isobutyl group, a sec-butyl group, a tert-butyl group, a pentyl group, a hexyl group, a heptyl group, an octyl group, a nonyl group, a decyl group, an undecyl group, a dodecyl group, and an icosyl group.

Examples of the alkyl group containing 1 to 10 carbon atoms may include a methyl group, an ethyl group, a propyl group, an isopropyl group, a butyl group, an isobutyl group, a sec-butyl group, a tert-butyl group, and a pentyl group. Examples of the alkyl group containing 1 to 6 carbon atoms may include a methyl group, an ethyl group, a propyl group, an isopropyl group, a butyl group, an isobutyl group, a sec-butyl group, a tert-butyl group, a pentyl group, and a hexyl group.

Examples of the alkoxy group containing 1 to 20 carbon atoms may include a methoxy group, an ethoxy group, a propyloxy group, an isopropyloxy group, a butoxy group, an isobutoxy group, a sec-butoxy group, a tert-butoxy group, a pentyloxy group, a hexyloxy group, a heptyloxy group, an octyloxy group, a nonyloxy group, a decyloxy group, an undecyloxy group, a dodecyloxy group, and an icosyloxy group.

Examples of the alkoxy group containing 1 to 10 carbon atoms may include a methoxy group, an ethoxy group, a propyloxy group, an isopropyloxy group, a butoxy group, an isobutoxy group, a sec-butoxy group, a tert-butoxy group, and a pentyloxy group.

Examples of the cycloalkyl group containing 5 to 20 carbon atoms may include a cyclopentyl group, a cyclohexyl group, a cycloheptyl group, a cyclooctyl group, a cyclododecyl group, a cyclotridecyl group, a cyclotetradecyl group, a cyclopentadecyl group, a cyclooctadecyl group, a bicyclo[2.2.1]heptyl group, and a bicyclo[2.2.2]octyl group.

Examples of the cycloalkyl group containing 5 to 10 carbon atoms may include a cyclopentyl group, a cyclohexyl group, a cycloheptyl group, a bicyclo[2.2.1]heptyl group, and a bicyclo[2.2.2]octyl group.

Examples of the cycloalkoxy group containing 5 to 20 carbon atoms may include a cyclopentyloxy group, a cyclohexyloxy group, a cycloheptyloxy group, a cyclooctyloxy group, a cyclododecyloxy group, a cyclotridecyloxy group, a cyclotetradecyloxy group, a cyclopentadecyloxy group, a cyclooctadecyloxy group, a bicyclo[2.2.1]heptyloxy group, and a bicyclo[2.2.2]octyloxy group.

Examples of the cycloalkyloxy group containing 5 to 10 carbon atoms may include a cyclopentyloxy group, a cyclohexyloxy group, a bicyclo[2.2.1]heptyloxy group, and a bicyclo[2.2.2]octyloxy group.

Examples of the aryl group containing 6 to 20 carbon atoms may include a phenyl group, a tolyl group, a xylyl group, a trimethylphenyl group, a tetramethylphenyl group, an ethylphenyl group, an ethylmethylphenyl group, a diethylphenyl group, a propylphenyl group, an isopropylphenyl group, an isopropylmethylphenyl group, a benzyl group, a phenethyl group, a phenylpropyl group, a naphthyl group, an anthracenyl group, a phenanthrenyl group, a naphthacenyl group, a chryserinyl group, a pyrenyl group, a biphenyl group, a terphenyl group, and a quaterphenyl group.

Examples of the heteroaryl group containing 3 to 20 carbon atoms, which comprises one or more heterocyclic atoms selected from O, N and S, may include a furanyl group, a benzofuranyl group, an isobenzofuranyl group, a pyrrolyl group, an imidazolyl group, a pyrazolyl group, a triazolyl group, a pyridyl group, a pyrazyl group, a pyrimidyl group, a pyridazyl group, a pyrrolidyl group, an indolyl group, an isoindolyl group, an indazolyl group, a quinolyl group, an isoquinolyl group, a naphthyridyl group, a quinoxalyl group, a quinazolyl group, a pteridyl group, a phenanthridyl group, an acridinyl group, a pyrimidinyl group, a phenanthrolinyl group, a phenazinyl group, a thiophenyl group, a thiopyranyl group, a benzothiophenyl group, a benzothiopyranyl group, an oxazolyl group, an isoxazolyl group, a thiazolyl group, an isothiazolyl group, a furazanyl group, an oxadiazolyl group, a dithiazolyl group, a benzoxazolyl group, a benzoisoxazolyl group, a benzothiazolyl group, and a benzoisothiazolyl group.

Examples of the aryloxy group containing 6 to 20 carbon atoms may include a phenyloxy group, a tolyloxy group, a xylyloxy group, a trimethylphenyloxy group, a tetramethylphenyloxy group, an ethylphenyloxy group, an ethylmethylphenyloxy group, a diethylphenyloxy group, a propylphenyloxy group, an isopropylphenyloxy group, an isopropylmethylphenyloxy group, a naphthyloxy group, an anthracenyloxy group, a phenanthrenyloxy group, a naphthacenyloxy group, a chryserinyloxy group, a pyrenyloxy group, a biphenyloxy group, a terphenyloxy group, and a quaterphenyloxy group.

Examples of the alkyloxycarbonyl group containing 2 to 10 carbon atoms may include a methyloxycarbonyl group, an ethyloxycarbonyl group, a propyloxycarbonyl group, an isopropyloxycarbonyl group, a butyloxycarbonyl group, an isobutyloxycarbonyl group, a sec-butyloxycarbonyl group, and a tert-butyloxycarbonyl group.

Examples of the cycloalkyloxycarbonyl group containing 5 to 10 carbon atoms may include a cyclopentyloxycarbonyl group, a cyclohexyloxycarbonyl group, a bicyclo[2.2.1]heptyloxycarbonyl group, and a bicyclo[2.2.2]octyloxycarbonyl group.

Examples of the aryloxycarbonyl group containing 7 to 15 carbon atoms may include a phenyloxycarbonyl group, a tolyloxycarbonyl group, a xylyloxycarbonyl group, a trimethylphenyloxycarbonyl group, a tetramethylphenyloxycarbonyl group, an ethylphenyloxycarbonyl group, an ethylmethylphenyloxycarbonyl group, a diethylphenyloxycarbonyl group, and a naphthyloxycarbonyl group.

Examples of the alkylcarbonyloxy group containing 2 to 10 carbon atoms may include a methylcarbonyloxy group, an ethylcarbonyloxy group, a propylcarbonyloxy group, an isopropylcarbonyloxy group, and a butylcarbonyloxy group.

Examples of the cycloalkylcarbonyloxy group containing 5 to 10 carbon atoms may include a cyclopentylcarbonyloxy group, a cyclohexylcarbonyloxy group, a bicyclo[2.2.1]heptylcarbonyloxy group, and a bicyclo[2.2.2]octylcarbonyloxy group.

Examples of the arylcarbonyloxy group containing 7 to 15 carbon atoms may include a phenylcarbonyloxy group, a tolylcarbonyloxy group, a xylylcarbonyloxy group, a trimethylphenylcarbonyloxy group, a tetramethylphenylcarbonyloxy group, an ethylphenylcarbonyloxy group, an ethylmethylphenylcarbonyloxy group, a diethylphenylcarbonyloxy group, and a naphthylcarbonyloxy group.

Examples of the hydroxyalkylcarbonyl group containing 2 to 10 carbon atoms may include a hydroxymethylcarbonyl group, a hydroxyethylcarbonyl group, and a hydroxypropylcarbonyl group.

Examples of the amide group containing 1 to 10 carbon atoms may include a methylaminocarbonyl group, an ethylaminocarbonyl group, a dimethylaminocarbonyl group, and an acetylamino group.

### < Method for producing recycled resin >

One embodiment of the present invention relates to a method for producing a recycled resin. The above-described production method comprises: a step of irradiating a laser light to a molding waste product consisting of a thermoplastic resin, identifying the type of the thermoplastic resin of the molding waste product based on a Raman scattering light scattered from the molding waste product, and separating and recovering the molding waste product (hereinafter also referred to as a "separation and recovery step"); and a step of obtaining a recycled resin from the separated and recovered molding waste product (hereinafter also referred to as a "recycled resin production step").

The above-described production method may also comprise, as necessary, a step of supplying a waste composition containing the molding waste product to a vibration transport floor, and vibration-transporting the waste composition (hereinafter also referred to as a "vibration transport step"), before the separation and recovery step.

In the above-described production method, the thermoplastic resin comprises at least one selected from a constituent unit (A) derived from a monomer represented by the following general formula (1), a constituent unit (B) derived from a monomer represented by the following general formula (2), a constituent unit (C) derived from a monomer represented by the following general formula (3), a constituent unit (D) derived from a monomer represented by the following general formula (4), and a constituent unit (E) derived from a monomer represented by the following general formula (5).

In several embodiments, in the above-described production method, the thermoplastic resin comprises at least one selected from a constituent unit (A) derived from a monomer represented by the following general formula (1), a constituent unit (B) derived from a monomer represented by the following general formula (2), a constituent unit (C) derived from a monomer represented by the following general formula (3), and a constituent unit (D) derived from a monomer represented by the following general formula (4).

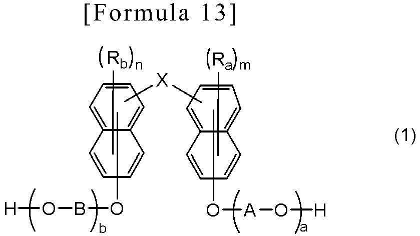

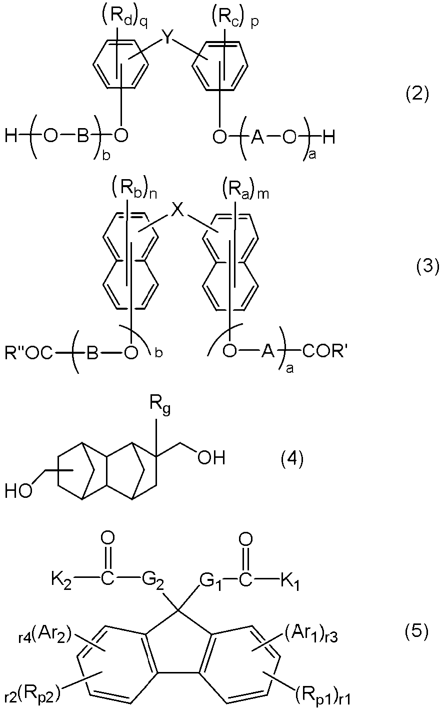

Hereafter, the present invention will be described with reference to the drawings. It is to be noted that, in some cases, the drawings may be exaggerated for the purpose of explanation, and may differ from the actual dimensions.

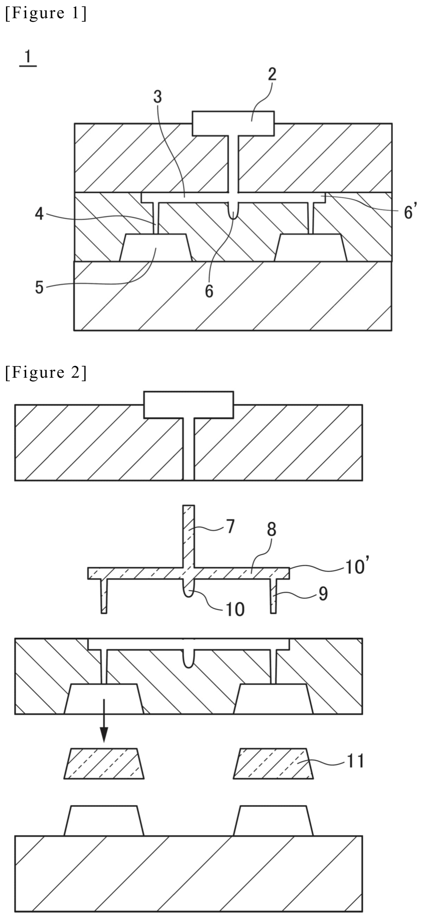

Figure 1 is a view schematically showing one embodiment of a mold. A mold 1 has a sprue 2, a runner 3, a gate 4, a cavity core 5, and cold slug wells 6 and 6'.

A molten resin is injected and poured from the sprue 2 into the mold 1. The inner diameter of the sprue 2 is circular, and the inner diameter becomes large toward the inside of the mold 1. For this reason, the sprue 2 has an approximately truncated cone shape. In addition, the length of the sprue 2 usually depends on the distance to the runner 3, i.e., the thickness of the mold.

The molten resin poured from the sprue 2 passes through the runner 3 that branches into two parts. The length and inner diameter of the runner 3 are set in consideration of the shape of the molded product, the properties of the molten resin, and the like. The runner 3 usually has an approximately cylindrical shape. It is to be note that, in Figure 1, the runner 3 branches into two parts, but that it may have only one runner without branching, or it may branch into three or more parts. When the molded product is small, from the viewpoint of production efficiency, the runner 3 preferably branches into three or more parts, more preferably 3 to 30 parts, further preferably 3 to 25 parts, particularly preferably 3 to 20 parts, extremely preferably 3 to 10 parts, and most preferably 4 to 8 parts.

The molten resin that has passed through the runner 3 passes through the gate 4. The gate 4 has the function of controlling the speed of pouring the molten resin into the cavity core 5. Usually, the inner diameter of the gate 4 is set to be smaller than that of the runner 3, which can increase the pouring speed of the molten resin. It is to be noted that, in Figure 1, the gate 4 is formed perpendicular to the runner 3, but that it may be formed parallel to the runner 3.

The molten resin that passes through the gate 4 is injected into the cavity core 5. Here, the cavity core 5 consists of a cavity, which is a recessed portion, and a core, which is a protruding portion. The molten resin is injected into the cavity (recessed portion) in the cavity core 5, and using a hollow portion generated by joining the cavity (recessed portion) and the core (protruding portion) together, the molten resin can be molded into a desired shape of plastic product (molded body). It is to be noted that the cavity core 5 can be formed into a so-called "nested structure" by previously performing pocket processing on the mold 1, and then attaching a cavity and a core that have been prepared, separately, to the pocket processed.

In the mold 1, the cold slug well 6 is formed at the end of the sprue 2, and the cold slug well 6' is formed at the end of the runner, respectively. The cold slug wells 6 and 6' have the function of preventing molding defects, etc. of plastic products by sealing impurities, decomposition gases, etc. that may be contained in the tip of the molten resin.

After the injection and pouring of the molten resin, the mold is cooled to solidify the molten resin present in the sprue 2, the runner 3, the gate 4, the cavity core 5, and the cold slug wells 6 and 6' (cold runner method). Figure 2 is a view schematically showing one embodiment after injection molding. In Figure 2, a plastic product 11 is separated from a molding waste product and is taken out. Besides, it may also be possible to take out a plastic product 11 and the molding waste product in a unitary state, and then to separate the plastic product 11.

As shown in Figure 2, the part of the solidified molten resin molded body excluding the plastic product 11 is a molding waste product. In the embodiment shown in Figure 2, the molding waste product includes a sprue part 7 derived from sprue, a runner part 8 derived from runner, a gate part 9 derived from gate, and cold slug well parts 10 and 10' derived from cold slug wells.

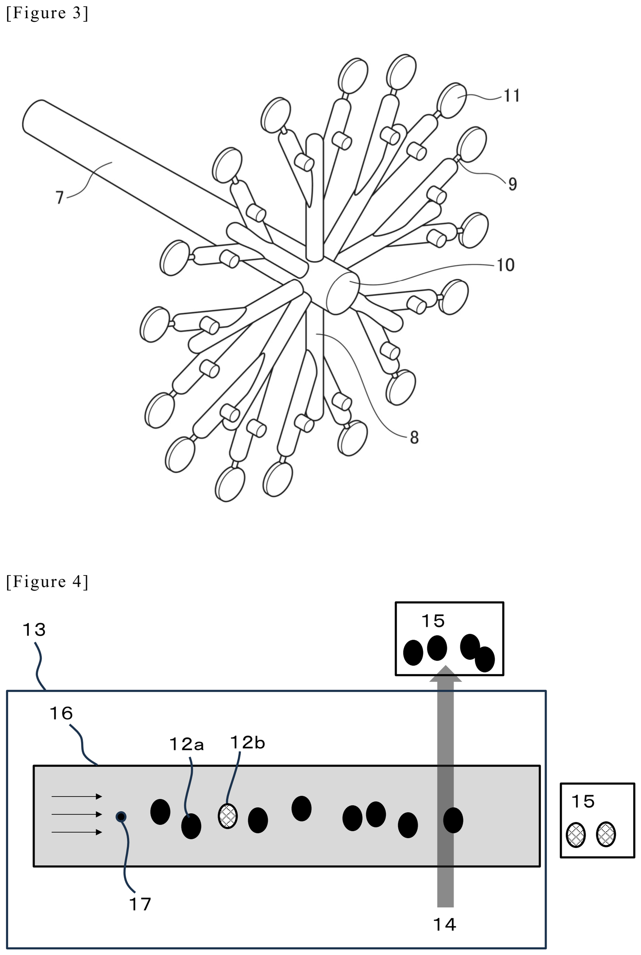

Figure 3 is a schematic view of a one-piece product of a plastic product and a molding waste product, which were obtained after the injection molding. The molding waste product is a product obtained by separating a plastic product 11 separated from the one-piece product, and it comprises a sprue part 7, eight runner parts 8 with a branched structure, a gate part 9, and cold slug well part 10 at the end of the sprue part. In the one-piece product of the present embodiment, the gate part 9 is formed at the end of the runner part 9, and the plastic product 11 formed at the tip of the gate part 9. The molding waste product shown in Figure 3 comprises an axial sprue part 7, eight leg-shaped (branched) runner parts 8 that extend evenly from the lower part of the axis in the circumferential direction, a gate part 9 at the tip of the runner part 8, and a cold slug well part 10 at the end of the sprue part 7.

### (Molding waste product)

The molding waste product indicates a part of a molded body generated during the molding process of a thermoplastic resin excluding a product (e.g., the plastic product 11 shown in Figure 2 and Figure 3). Therefore, the molding waste product is composed by comprising thermoplastic resin. The molding waste product may be composed of one type of thermoplastic resin, or it may be composed of two or more types of thermoplastic resins. With regard to the thermoplastic resin that constitutes the molding waste product, the type and combination of the resins may be set according to the physical properties, etc. of the desired plastic product (molded body).

In several embodiments, the molding waste product is discharged after an optical material has been molded. In several embodiments, the molding waste product is discharged after an optical lens has been molded.

The molding waste product comprises at least one selected from the group consisting of a sprue part, a runner part, a gate part, and a cold slug well part. Besides, at least one of the sprue part, the runner part, the gate part, and the cold slug well part may fall off from the molding waste product due to breakage or the like caused by mechanical shocks such as recovery, transportation, and mixing of the molding waste product.

In several embodiments, the molding waste product comprises one, or two, or three, or four selected from the group consisting of a sprue part, a runner part, a gate part, and a cold slug well part. In one embodiment, the molding waste product comprises a sprue part and/or a runner part. In one embodiment, the molding waste product comprises a sprue part and/or a runner part. In one embodiment, the molding waste product comprises a sprue part, a runner part, and a gate part . In one embodiment, the molding waste product comprises a sprue part, a runner part, and a cold slug well part. In one embodiment, the molding waste product comprises a sprue part, a runner part, a gate part, and a cold slug well part. In these embodiments, the molding waste product is discharged after an optical material (preferably, an optical lens) has been molded.

It is to be noted that the molding waste product composition may contain molding waste products of different shapes. In the present description, the term "comprise" means that the molding waste product or the like is allowed to have other configurations, and the term " comprise" is synonymous with, for example, "include."

In the present description, the "sprue part" means a part having a shape derived from a sprue (a flow path of a molten resin) in a mold. In the present description, the "molten resin" means a resin in a molten state.

The shape of the sprue part is not particularly limited, and it is preferably a truncated cone.

The inner diameter of the sprue part varies depending on the physical properties of the molten resin used, the shape of a desired plastic product (molded product), etc., and it is preferably 0.1 to 10 mm, more preferably 1 to 8 mm, and further preferably 1 to 6 mm. Besides, in the present description, the "inner diameter" means the maximum distance among the distances between two points on the contour line of a vertical cross section of an object with respect to the longitudinal direction. For example, if the shape of the sprue part is a truncated cone, the maximum inner diameter thereof corresponds to the "inner diameter".

The length of the sprue part (corresponding to the height of a truncated cone, if the sprue part is a truncated cone) is preferably 0.1 to 200 mm, more preferably 1 to 100 mm, and further preferably 1 to 50 mm.

In the present description, the term "runner part" means a part having a shape derived from a runner (a flow path of a molten resin) in the mold. The molding waste products are easily entangled with one another by allowing the molding waste products to have such a runner part.

The shape of the runner part is preferably cylindrical. The runner part may also have a shape that branches in two or more directions, preferably in two or three directions, along the way.

The runner part is preferably formed perpendicular to the length of the sprue part. Thereby, molding defects can be prevented. However, forming the runner part perpendicular to the length of the sprue part can become a factor that makes it easier for molding waste products to be entangled with one another.

In addition, as described above, the mold may have a structure in which the molten resin poured from the sprue flows in two or more directions due to branched runners. For this reason, the molding waste product may have two or more runner parts. In one embodiment, the molding waste product preferably has three or more runner parts, more preferably has 3 to 30 runner parts, further preferably has 3 to 25 runner parts, particularly preferably 3 to 20 runner parts, extremely preferably 3 to 10 runner parts, and most preferable 4 to 8 runner parts.

The inner diameter of the runner part varies depending on the physical properties of the molten resin used, the shape of a desired plastic product (molded product), etc., and it is preferably 0.1 to 5 mm, more preferably 0.1 to 4 mm, and further preferably 1 to 4 mm.

The length of the runner part (corresponding to the height of a cylinder if the runner part is cylindrical) is preferably 0.1 to 200 mm, more preferably 1 to 100 mm, and further preferably 1 to 50 mm.

In the present description, the "gate part" means a part having a shape derived from a gate (a flow path of a molten resin) in the mold.

The shape of the gate part is not particularly limited, and it can be set appropriately depending on the physical properties of the molten resin used, the shape of a desired plastic product (molded product), etc.

The inner diameter of the gate part varies depending on the physical properties of the molten resin used, the shape of a desired plastic product (molded product), etc., and it is preferably 0.1 to 5 mm, more preferably 0.1 to 3 mm, and further preferably 0.1 to 2 mm. The inner diameter of the gate part is preferably smaller than the inner diameter of the runner part.

The length of the gate part is not particularly limited, either, and it can be set appropriately depending on the physical properties of the molten resin used, the shape of a desired plastic product (molded product), etc.

In the present description, the "cold slug well part" means a part having a shape derived from a cold slug well (a sealed part of a molten resin containing impurities, decomposition gases, etc.) in the mold.

The shape of the cold slug well part is not particularly limited, and it is preferably a test tube shape, a truncated cone, or a cylindrical shape.

The inner diameter of the cold slug well part varies depending on the physical properties of the molten resin used, the shape of a desired plastic product (molded product), etc., and when the gate part is formed at the end of the sprue part, the inner diameter of the cold slug well part is preferably 0.1 to 10 mm, and more preferably 1 to 8 mm.

On the other hand, when the gate part is formed at the end of the runner part, the inner diameter of the cold slug well part is preferably 0.1 to 5 mm, and more preferably 1 to 4 mm.

The length of the cold slug well part is not particularly limited, and it is preferably 0.1 to 20 mm, and more preferably 0.1 to 10 mm.

The molding waste product may contain resins other than the thermoplastic resin, additives, decomposition products thereof, etc., in addition to the thermoplastic resin. Besides, in the present description, the "resin" means a resin having a weight average molecular weight of 1000 or more.

The content of the thermoplastic resin in the molding waste product is usually 80% by weight or more, preferably 85% by weight or more, more preferably 90% by weight or more, further preferably 95% by weight or more, still further preferably 98% by weight or more, and particularly preferably 100% by weight, based on the total weight of the molding waste product.

### (Waste composition)

In the present description, the waste composition comprises two or more molding waste products. The waste composition comprises molding waste products generated during the process of producing a molded body. The waste composition may further comprise molded products recovered after being utilized as a part of a product, defective products generated during the molding step, defective products generated during the production step, unused molded products that are no longer needed, etc., in addition to the molding waste products.

The content of the molding waste products in the waste composition is preferably 30% by mass or more, more preferably 40% by mass or more, further preferably 50% by mass or more, and particularly preferably 50% to 100% by mass, based on the total mass of the waste composition.

As such a waste composition, recovered molding waste products of the same lot may be used, or a combination of recovered molding waste products of different lots may also be used.

### (Thermoplastic resin)

The thermoplastic resin that constitutes the molding waste product is not particularly limited, and examples thereof may include a polyester resin, a polycarbonate resin, a polyester carbonate resin, an epoxy resin, a polyurethane resin, a polyacrylic ester resin, and a polymethacrylic acid ester resin. The thermoplastic resin is preferably a polycarbonate resin, a polyester carbonate resin or a polyester resin, and is more preferably a polycarbonate resin.

In the present invention, the thermoplastic resin that constitutes the molding waste product comprises at least one selected from a constituent unit (A) derived from a monomer represented by the following general formula (1), a constituent unit (B) derived from a monomer represented by the following general formula (2), a constituent unit (C) derived from a monomer represented by the following general formula (3), a constituent unit (D) derived from a monomer represented by the following general formula (4), and a constituent unit (E) derived from a monomer represented by the following general formula (5). In several embodiments, the thermoplastic resin that constitutes the molding waste product comprises at least one selected from , a constituent unit (B) derived from a monomer represented by the following general formula (2), a constituent unit (C) derived from a monomer represented by the following general formula (3), and a constituent unit (D) derived from a monomer represented by the following general formula (4).

For example, when the thermoplastic resin is a polycarbonate resin, it comprises at least one selected from the constituent unit (A), the constituent unit (B), and the constituent unit (D).

For example, when the thermoplastic resin is a polyester resin or a polyester carbonate resin, it comprises at least one selected from the constituent unit (A), the constituent unit (B), the constituent unit (C), the constituent unit (D) and the constituent unit (E). Otherwise, when the thermoplastic resin is a polyester resin or polyester carbonate resin, it comprises at least one selected from the constituent unit (A), the constituent unit (B), the constituent unit (C), and the constituent unit (D).

In several embodiments, the thermoplastic resin having the constituent unit (C) derived from the monomer represented by the above formula (3) and/or the constituent unit (E) derived from the monomer represented by the above formula (5) is a resin (e.g., a polyester resin) comprising a constituent unit derived from a dihydroxy compound (diol), as well as the above-described constituent unit (E). Examples of the dihydroxy compound (diol) may include the constituent unit (A), the constituent unit (B) and the constituent unit (D) derived from dihydroxy compounds (diols) represented by the above formula (1), formula (2) and/or formula (4), and/or constituent units derived from dihydroxy compounds (diols) that induce other constituent units as described later.

### (1) Constituent unit(A)

In several embodiments, the thermoplastic resin comprises a constituent unit (A) derived from a monomer represented by the following general formula (1). The constituent unit (A) may be comprised in the thermoplastic resin as one type alone, or as two or more types in combination.

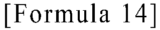

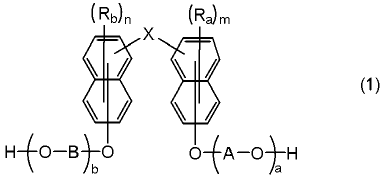

In the formula (1), Rₐ and R_{b} are each independently selected from the group consisting of a hydrogen atom, a halogen atom, an alkyl group containing 1 to 20 carbon atoms and optionally being substituted, an alkoxy group containing 1 to 20 carbon atoms and optionally being substituted, a cycloalkyl group containing 5 to 20 carbon atoms and optionally being substituted, a cycloalkoxy group containing 5 to 20 carbon atoms and optionally being substituted, and an aryl group containing 6 to 20 carbon atoms and optionally being substituted, a heteroaryl group containing 3 to 20 carbon atoms and optionally being substituted, which comprises one or more heterocyclic atoms selected from O, N and S, an aryloxy group containing 6 to 20 carbon atoms and optionally being substituted, and -C≡C-Rₕ.

Rₕ represents an aryl group containing 6 to 20 carbon atoms and optionally being substituted, or a heteroaryl group containing 3 to 20 carbon atoms and optionally being substituted, which comprises one or more heterocyclic atoms selected from O, N and S.

Rₐ and R_{b} each preferably represent a hydrogen atom, an aryl group containing 6 to 20 carbon atoms and optionally being substituted, or a heteroaryl group containing 3 to 20 carbon atoms and optionally being substituted, which comprises one or more heterocyclic atoms selected from O, N and S; each more preferably represent a hydrogen atom or an aryl group containing 6 to 20 carbon atoms and optionally being substituted; and each further preferably represent a hydrogen atom or an aryl group containing 6 to 12 carbon atoms and optionally being substituted.

In the formula (1), X represents a single bond or a fluorene group optionally being substituted. X preferably represents a single bond, or a fluorene group having a total number of carbon atoms that is 12 to 20 and optionally being substituted.

In the formula (1), A and B each independently represent an alkylene group containing 1 to 5 carbon atoms and optionally being substituted, and each preferably represent an alkylene group containing 2 or 3 carbon atoms.

In the formula (1), m and n each independently represent an integer of 0 to 6, each preferably represent an integer of 0 to 3, and each more preferably represent 0 or 1.

In the formula (1), a and b each independently represent an integer of 0 to 10, each preferably represent an integer of 1 to 3, and each more preferably represent 1 or 2.

In the above formula (1), the substituent in the case of "optionally being substituted" is not particularly limited. Examples of the substituent may include a halogen atom, an alkyl group containing 1 to 10 carbon atoms, a cycloalkyl group containing 5 to 10 carbon atoms, an alkoxy group containing 1 to 10 carbon atoms, a cycloalkoxy group containing 5 to 10 carbon atoms, an alkyloxycarbonyl group containing 2 to 10 carbon atoms, a cycloalkyloxycarbonyl group containing 5 to 10 carbon atoms, an aryloxycarbonyl group containing 7 to 15 carbon atoms, an alkylcarbonyloxy group containing 2 to 10 carbon atoms, a cycloalkylcarbonyloxy group containing 5 to 10 carbon atoms, an arylcarbonyloxy group containing 7 to 15 carbon atoms, a hydroxyalkylcarbonyl group containing 2 to 10 carbon atoms, a glycidyloxycarbonyl group, a hydroxy group, a carboxy group, a cyano group, and an amide group containing 1 to 10 carbon atoms.

Specific examples of the constituent unit (A) may include constituent units derived from 2,2'-bis(1-hydroxymethoxy)-1,1'-binaphthalene, 2,2'-bis(2-hydroxyethoxy)-1,1'-binaphthalene (also referred to as "BNE"), 2,2'-bis(2-hydroxyethoxy)-6,6'-diphenyl-1,1'-binaphthalene (also referred to as "DP"), 9,9-bis[6-(2-hydroxyethoxy)naphthalen-2-yl]fluorene (also referred to as "BNEF"), 2,2'-bis(3-hydroxypropyloxy)-1,1'-binaphthalene, 2,2'-bis(4-hydroxybutoxy)-1,1'-binaphthalene, etc.

In one embodiment, the constituent unit (A) comprises at least one of constituent units derived from BNE, DP, and BNEF.

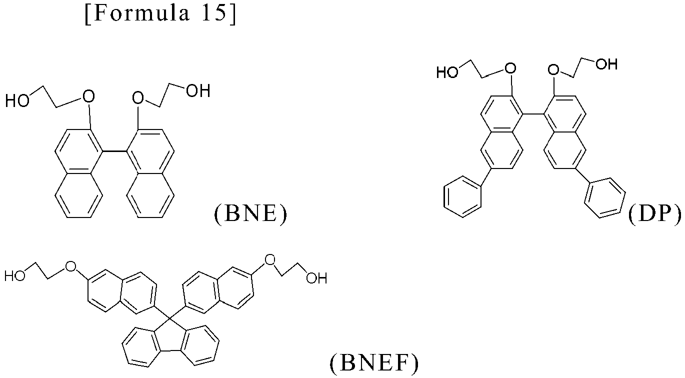

### (2) Constituent unit (B)

In several embodiments, the thermoplastic resin comprises a constituent unit (B) derived from a monomer represented by the following general formula (2). The constituent unit (B) may be comprised in the thermoplastic resin as one type alone, or as two or more types in combination.

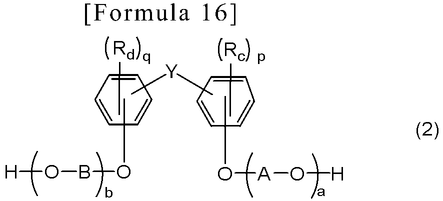

In the formula (2), R_{c} and R_{d} are each independently selected from the group consisting of a halogen atom, an alkyl group containing 1 to 20 carbon atoms and optionally being substituted, an alkoxy group containing 1 to 20 carbon atoms and optionally being substituted, a cycloalkyl group containing 5 to 20 carbon atoms and optionally being substituted, a cycloalkoxy group containing 5 to 20 carbon atoms and optionally being substituted, and an aryl group containing 6 to 20 carbon atoms and optionally being substituted.

R_{c} and R_{d} each preferably represent a hydrogen atom, an aryl group containing 6 to 20 carbon atoms and optionally being substituted, a heteroaryl group containing 3 to 20 carbon atoms and optionally being substituted, which comprises one or more heterocyclic atoms selected from O, N and S; each more preferably represent a hydrogen atom or an aryl group containing 6 to 20 carbon atoms and optionally being substituted; and each further preferably represent a hydrogen atom or an aryl group containing 6 to 12 carbon atoms and optionally being substituted.

In the formula (2), Y is selected from the group consisting of a single bond, a fluorene group optionally being substituted, -CR₂₁R₂₂-,-S-, -S(=O)-, -(CH₂)ᵣ-, -O-, -(CH₂)ᵣ-(SiR₂₃R₂₄-O)ₛ-SiR₂₃R₂₄-(CH₂)ᵣ-, and-CR₂₅R₂₆-Ph-CR₂₅R₂₆-. Y preferably represents a single bond or-CR₂₁R₂₂-.

R₂₁, R₂₂, R₂₃, R₂₄, R₂₅ and R₂₆ are each independently represent a hydrogen atom, a halogen atom, an alkyl group containing 1 to 20 carbon atoms and optionally being substituted, or an aryl group containing 6 to 30 carbon atoms and optionally being substituted, or R₆₁ and R₆₂, or R₇₁ and R₇₂ bind to each other to form a carbon ring or heteroring, containing 1 to 20 carbon atoms and optionally being substituted.

Ph represents a phenyl group.

r and s each independently represent an integer of 0 to 5000.

In the formula (2), A and B each independently represent an alkylene group containing 1 to 5 carbon atoms and optionally being substituted. A and B each independently represent an alkylene group containing 1 to 5 carbon atoms and optionally being substituted, and each preferably represent an alkylene group containing 2 or 3 carbon atoms.

In the formula (2), p and q each independently represent an integer of 0 to 4, and each preferably represent 0 or 1.

In the formula (2), a and b each independently represent an integer of 0 to 10, each preferably represent an integer of 0 to 5, and each more preferably represent an integer of 0 to 2, and a and b are, for example, 0 or 1.

In the above formula (2), the substituent in the case of "optionally being substituted" is not particularly limited. Examples of the substituent may include a halogen atom, an alkyl group containing 1 to 10 carbon atoms, a cycloalkyl group containing 5 to 10 carbon atoms, an alkoxy group containing 1 to 10 carbon atoms, a cycloalkoxy group containing 5 to 10 carbon atoms, an alkyloxycarbonyl group containing 2 to 10 carbon atoms, a cycloalkyloxycarbonyl group containing 5 to 10 carbon atoms, an aryloxycarbonyl group containing 7 to 15 carbon atoms, an alkylcarbonyloxy group containing 2 to 10 carbon atoms, a cycloalkylcarbonyloxy group containing 5 to 10 carbon atoms, an arylcarbonyloxy group containing 7 to 15 carbon atoms, a hydroxyalkylcarbonyl group containing 2 to 10 carbon atoms, a glycidyloxycarbonyl group, a hydroxy group, a carboxy group, a cyano group, and an amide group containing 1 to 10 carbon atoms.

Specific examples of the constituent unit (B) may include constituent units derived from 9,9-bis(4-hydroxy-3-methylphenyl)fluorene (also referred to as "BCFL"), 9,9-bis(4-(2-hydroxyethoxy)phenyl)fluorene (also referred to as "BPEF"), 9,9-bis(4-(2-hydroxyethoxy)-3-phenylphenyl)fluorene (also referred to as "BPPEF"), 9,9-bis(4-hydroxyphenyl)fluorene, 9,9-bis[4-(2-hydroxyethoxy)-3-methylphenyl]fluorene, 9,9-bis[4-(2-hydroxyethoxy)-3-tert-butylphenyl]fluorene, 9,9-bis[4-(2-hydroxyethoxy)-3-isopropylphenyl]fluorene, 9,9-bis[4-(2-hydroxyethoxy)-3-cyclohexylphenyl]fluorene, bisphenol A (also referred to as "BPA"), bisphenol AP, bisphenol AF, bisphenol B, bisphenol BP, bisphenol C, bis(4-hydroxyphenyl)-2,2-dichloroethylene, bisphenol E, bisphenol F, bisphenol G, bisphenol M (also referred to as "BPM"), bisphenol S, bisphenol P, bisphenol PH, bisphenol TMC, bisphenol P-AP (4,4'-(1-phenylethylidene)bisphenol), bisphenol P-CDE (4,4'-cyclododecylidenebisphenol), bisphenol P-HTG (4,4'-(3,3,5-trimethylcyclohexylidene)bisphenol), bisphenol P-MIBK (4,4'-(1,3-dimethylbutylidene)bisphenol), bisphenol PEO-FL (bisphenoxyethanol fluorene), bisphenol P-3MZ (4-[1-(4-hydroxyphenyl)-3-methylcyclohexyl]phenol), bisphenol OC-FL (4,4'-[1-[4-[1-(4-hydroxyphenyl)-1-methylethyl]phenyl]ethylidene]bisphenol), bisphenol Z, BP-2EO (2,2'-[1,1'-biphenyl]-4,4'-diylbis(oxy)bisethanol), S-BOC (4,4'-(1-methylethylidene)bis(2-methylphenol)), TrisP-HAP (4,4',4''-ethylidenetrisphenol), etc.

In one embodiment, the constituent unit (B) comprises at least one of constituent units derived from BPEF, BPPEF, BPA, BPM, and BCFL.

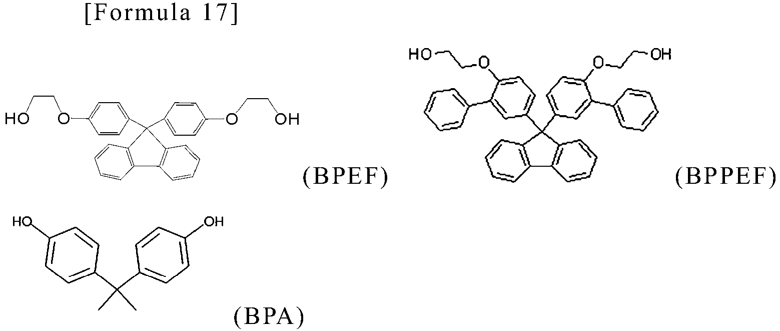

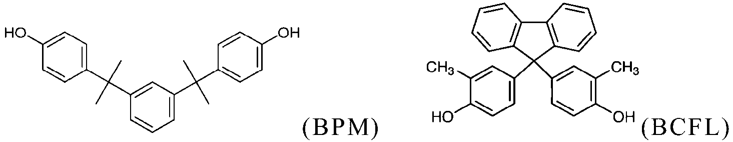

### (3) Constituent unit (C)

In several embodiments, the thermoplastic resin comprises a constituent unit derived from a monomer represented by the following general formula (3). The constituent unit (C) may be comprised in the thermoplastic resin as one type alone, or as two or more types in combination.

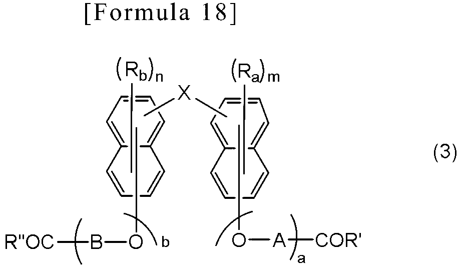

In the formula (3), Rₐ and R_{b} are each independently selected from the group consisting of a hydrogen atom, a halogen atom, an alkyl group containing 1 to 20 carbon atoms and optionally being substituted, an alkoxy group containing 1 to 20 carbon atoms and optionally being substituted, a cycloalkyl group containing 5 to 20 carbon atoms and optionally being substituted, a cycloalkoxy group containing 5 to 20 carbon atoms and optionally being substituted, and an aryl group containing 6 to 20 carbon atoms and optionally being substituted, a heteroaryl group containing 3 to 20 carbon atoms and optionally being substituted, which comprises one or more heterocyclic atoms selected from O, N and S, an aryloxy group containing 6 to 20 carbon atoms and optionally being substituted, and -C≡C-Rₕ.

Rₕ represents an aryl group containing 6 to 20 carbon atoms and optionally being substituted, or a heteroaryl group containing 3 to 20 carbon atoms and optionally being substituted, which comprises one or more heterocyclic atoms selected from O, N and S.

Rₐ and R_{b} each preferably represent a hydrogen atom, an aryl group containing 6 to 20 carbon atoms and optionally being substituted, a heteroaryl group containing 3 to 20 carbon atoms and optionally being substituted, which comprises one or more heterocyclic atoms selected from O, N and S; each more preferably represent a hydrogen atom or an aryl group containing 6 to 20 carbon atoms and optionally being substituted; and each further preferably represent a hydrogen atom or an aryl group containing 6 to 12 carbon atoms and optionally being substituted.

In the formula (3), X represents a single bond or a fluorene group optionally being substituted. X preferably represents a single bond, or a fluorene group having a total number of carbon atoms that is 12 to 20 and optionally being substituted.

In the formula (3), A and B each independently represent an alkylene group containing 1 to 5 carbon atoms and optionally being substituted, and each preferably represent an alkylene group containing 2 or 3 carbon atoms.

In the formula (3), m and n each independently represent an integer of 0 to 6, each preferably represents an integer of 0 to 3, and each more preferably represent 0 or 1.

In the formula (3), a and b each independently represent an integer of 0 to 10, each preferably represent an integer of 1 to 3, and more preferably represent 1 or 2.

In the formula (3), R' and R" are each independently selected from the group consisting of a hydroxy group, a halogen atom, an alkoxy group containing 1 to 20 carbon atoms and optionally being substituted, and an aryloxy group containing 6 to 20 carbon atoms and optionally being substituted. R' and R" each preferably represent a hydroxy group, a linear alkoxy group containing 1 to 5 carbon atoms, or an aryloxy group containing 6 to 10 carbon atoms; and each more preferably represent a hydroxy group, a methoxy group, an ethoxy group, or a phenyloxy group.

In the above formula (3), the substituent in the case of "optionally being substituted" is not particularly limited. Examples of the substituent may include a halogen atom, an alkyl group containing 1 to 10 carbon atoms, a cycloalkyl group containing 5 to 10 carbon atoms, an alkoxy group containing 1 to 10 carbon atoms, a cycloalkoxy group containing 5 to 10 carbon atoms, an alkyloxycarbonyl group containing 2 to 10 carbon atoms, a cycloalkyloxycarbonyl group containing 5 to 10 carbon atoms, an aryloxycarbonyl group containing 7 to 15 carbon atoms, an alkylcarbonyloxy group containing 2 to 10 carbon atoms, a cycloalkylcarbonyloxy group containing 5 to 10 carbon atoms, an arylcarbonyloxy group containing 7 to 15 carbon atoms, a hydroxyalkylcarbonyl group containing 2 to 10 carbon atoms, a glycidyloxycarbonyl group, a hydroxy group, a carboxy group, a cyano group, and an amide group containing 1 to 10 carbon atoms.

Specific examples of the constituent unit (C) may include constituent units derived from 2,2'-([1,1'-binaphthalene]-2,2'-diylbis(oxy))acetoacetate (BINOL-DC), and the methyl ester, ethyl ester and phenyl ester thereof, etc.

In one embodiment, the constituent unit (C) comprises at least one of constituent units derived from BINOL-DC, and the methyl ester, ethyl ester and phenyl ester thereof.

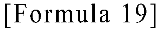

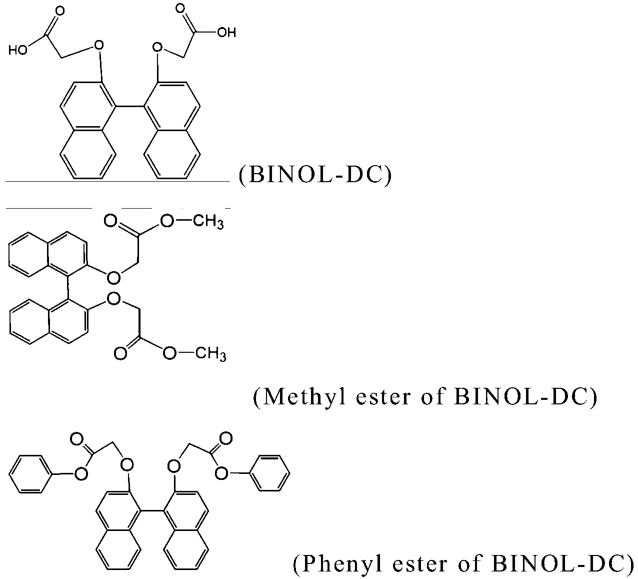

### (4) Constituent unit (D)

In several embodiments, the thermoplastic resin comprises a constituent unit (D) derived from a monomer represented by the following general formula (4). The constituent unit (D) may be comprised in the thermoplastic resin as one type alone, or as two or more types in combination.

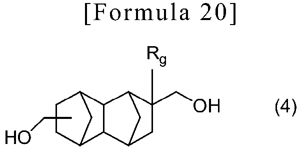

In the formula (4), R_{g} each independently represents a hydrogen atom or an alkyl group containing 1 to 3 carbon atoms. Examples of the above-described alkyl group containing 1 to 3 carbon atoms may include a methyl group, an ethyl group, a propyl group, and an isopropyl group. Of these, R_{g} each independently preferably represents a hydrogen atom.

Specific examples of the constituent unit (D) may include constituent units derived from decahydro-1,4:5,8-dimethanonaphthalenediols (also referred to as "D-NDM"). Examples of such constituent units may include those derived from (decahydro-1,4:5,8-dimethanonaphthalene-2,6-diyl)dimethanol, (decahydro-1,4:5,8-dimethanonaphthalene-2,7-diyl)dimethanol, (2-methyldecahydro-1,4:5,8-dimethanonaphthalene-2,6-diyl)dimethanol, (2-methyldecahydro-1,4:5,8-dimethanonaphthalene-2,7-diyl)dimethanol, (2-ethyldecahydro-1,4:5,8-dimethanonaphthalene-2,6-diyl)dimethanol, (2-ethyldecahydro-1,4:5,8-dimethanonaphthalene-2,7-diyl)dimethanol, etc.

In one embodiment, the constituent unit (D) comprises at least one constituent unit derived from D-NDM.

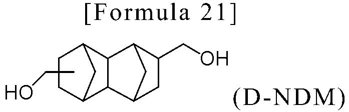

### (5) Constituent unit (E)

In several embodiments, the thermoplastic resin comprises a constituent unit (E) derived from a monomer represented by the following general formula (5). The constituent unit (E) may be comprised in the thermoplastic resin as one type alone, or as two or more types in combination.

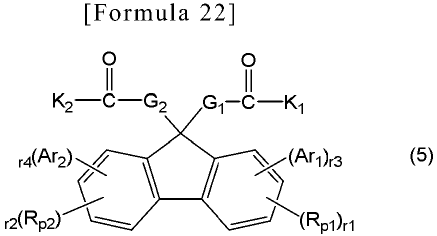

In the formula (5), G₁ and G₂ each independently represent an alkylene group containing 1 to 8 carbon atoms and optionally being substituted. Examples of the above-described alkylene group containing 1 to 8 carbon atoms may include methylene, ethylene, propylene, isopropylene, butylene, isobutylene, sec-butylene, tert-butylene, and pentylene. Of these, G₁ and G₂ are preferably methylene, ethylene, propylene, butylene, isobutylene, or sec-butylene; more preferably methylene, ethylene, or propylene; further preferably methylene or ethylene; and particularly preferably ethylene.

In the formula (5), K₁ and K₂ each independently represent a hydroxy group, an alkoxy group or a halogen atom. When K₁ and K₂ are each an alkoxy group, the number of carbon atoms thereof is not limited, and it is, for example, an alkoxy group containing 1 to 20 carbon atoms.

In the formula (5), Rₚ₁ and Rₚ₂ each independently represent a halogen atom, a cyano group, or an alkyl group containing 1 to 8 carbon atoms and optionally being substituted.

In the formula (5), Ar₁ and Ar₂ each independently represent a phenyl group or a naphthyl group, which may optionally be substituted.

In the formula (5), r₁ and r₂ each independently represent an integer of 0 to 2, and preferably 0 or 1.

In the formula (5), r₃ and r₄ each independently represent an integer of 0 or 1.

In the above formula (5), the substituent in the case of "optionally being substituted" is not particularly limited. Examples of the substituent may include a halogen atom, a hydroxy group, a carboxy group, and a cyano group. The aforementioned groups may have these substituents alone or may have two or more types in combination.

In several embodiments, the thermoplastic resin preferably comprises a resin having at least one constituent unit selected from the group consisting of the following general formulae (5-1) to (5-3). The general formula (5-1) is a 9,9-bis(carboxyalkyl)fluorene, which is a constituent unit derived from a monomer, in which, in the above formula (5), r₃ and r₄ are 0. The general formula (5-2) is a 9,9-bis(carboxyalkyl)-diarylfluorene, which is a constituent unit derived from a monomer, in which r₃ and r₄ are 1, and Ar₁ and Ar₂ are phenyl groups. The general formula (5-3) is a 9,9-bis(carboxyalkyl)-dinaphthylfluorene, which is a constituent unit derived from a monomer, in which r₃ and r₄ are 1, and Ar₁ and Ar₂ are naphthyl groups.

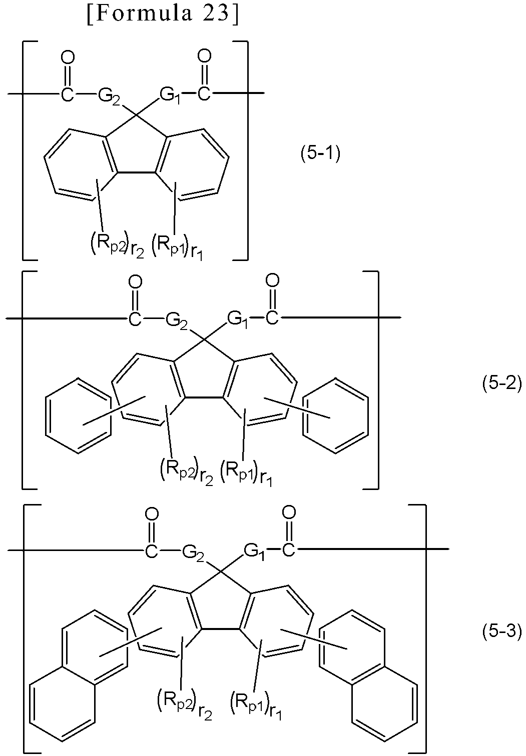

In the above formula (5-1), formula (5-2), and formula (5-3), G₁ and G₂, Rₚ₁ and Rₚ₂, and r₁ and r₂ are as defined in the formula (5).

Specific examples of the monomer, from which the constituent unit represented by the formula (5-1) is derived, may include 9,9-bis(carboxy C2-6 alkyl)fluorenes, and are preferably 9,9-bis(carboxy C2-4 alkyl)fluorenes, are more preferably 9,9-bis(carboxy C2-3 alkyl)fluorenes, and the alkyl esters and acid halides thereof. The monomer may be, for example, 9,9-bis(2-carboxyethyl)fluorene, 9,9-bis(2-carboxypropyl)fluorene, and the alkyl ester and acid halide thereof, and may be preferably 9,9-bis(2-carboxyethyl)fluorene, and the alkyl ester and acid halide thereof. When the monomer is an alkyl ester, the alkyl group is not particularly limited, and it is, for example, an alkyl group containing 1 to 20 carbon atoms.

Specific examples of the monomer, from which the constituent unit represented by the formula (5-2) is derived, may include 9,9-bis(carboxy C2-6 alkyl)-diphenylfluorenes, and are preferably 9,9-bis(carboxy C2-4 alkyl)-diphenylfluorenes, and are more preferably 9,9-bis(carboxy C2-3 alkyl)-diphenylfluorenes, and the alkyl esters and acid halides thereof. The monomers may be, for example, 9,9-bis(2-carboxyethyl)-1,8-diphenylfluorene, 9,9-bis(2-carboxyethyl)-2,7-diphenylfluorene, 9,9-bis(2-carboxyethyl)-3,6-diphenylfluorene, 9,9-bis(2-carboxyethyl)-4,5-diphenylfluorene, 9,9-bis(2-carboxypropyl)-2,7-diphenylfluorene, and the alkyl esters and acid halides thereof. When the monomer is an alkyl ester, the alkyl group is not particularly limited, and it is, for example, an alkyl group containing 1 to 20 carbon atoms.

Specific examples of the monomer, from which the constituent unit represented by the formula (5-3) is derived, may include constituent units derived from 9,9-bis(carboxy C2-6 alkyl)-dinaphthylfluorenes. In this case, the compound, from which the above-described constituent unit is derived, may be an alkyl ester, an acid halide, or an acid anhydride. For example, it is a constituent unit derived from a compound selected from among 9,9-bis(2-carboxyethyl)-1,8-di(2-naphthyl)fluorene, 9,9-bis(2-carboxyethyl)-2,7-di(2-naphthyl)fluorene, 9,9-bis(2-carboxyethyl)-3,6-di(2-naphthyl)fluorene, 9,9-bis(2-carboxyethyl)-4,5-di(2-naphthyl)fluorene, 9,9-bis(2-carboxypropyl)-2,7-di(2-naphthyl)fluorene, 9,9-bis(2-carboxyethyl)-2,7-di(1-naphthyl)fluorene, and the alkyl ester and acid halide thereof. When the monomer is an alkyl ester, the alkyl group is not particularly limited, and it is, for example, an alkyl group containing 1 to 20 carbon atoms.

In several embodiments, the constituent unit (E) includes constituent units derived from 9,9-bis(2-carboxyethyl)fluorene, and the alkyl ester thereof containing 1 to 20 carbon atoms (preferably containing 1 to 8 carbon atoms, and more preferably containing 1 to 6 carbon atoms), and the acid halide thereof.

In a specific embodiment, the constituent unit (E) includes a constituent unit derived from 9,9-bis(2-carboxyethyl)fluorene.

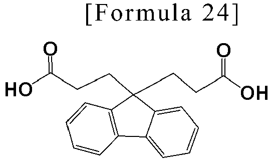

The above-described constituent unit (A), constituent unit (B), constituent unit (C), constituent unit (D), and constituent unit (E) may be comprised alone in the resin, or may also be comprised in combination of two or more types.

### (6) Other constituent units

Moreover, the resin may further comprise constituent units of other polycarbonate resins, as well as the aforementioned constituent units, or may further comprise constituent units of other resins (a polyester resin, a polyester carbonate resin, polyolefin resin, etc.).

Examples of the constituent units of other polycarbonate resins may include constituent units derived from: 2,2'-[1,4-phenylenebis(methyleneoxy[1,1'-binaphthalene]-2',2-diyloxy)]di(ethan-1-ol) (DBHBNABHP), which is represented by the following formula; spiroglycol (3,9-bis(1,1-dimethyl-2-hydroxyethyl)-2,4,8,10-tetraoxaspiro[5.5]undecane, SPG); bisphenol TMC; bisphenol A; dihydroxy compounds (diols) of alkylene glycols such as ethylene glycol, propylene glycol, butylene glycol, pentylene glycol, neopentyl glycol, and octylene glycol.

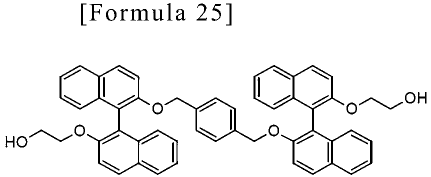

Moreover, examples of the constituent units of the polyester resins or polyester carbonate resins may include constituent units derived from terephthalic acid, naphthalene dicarboxylic acid, 9H-fluorene 9,9-dipropionic acid or its monoalkyl (methyl, ethyl, propyl, isopropyl, or butyl) ester derivatives or dialkyl ester derivatives (e.g., 9,9-di(2-methoxycarbonylethyl)fluorene, 9,9-di(2-carboxyethyl)fluorene), 2,2'-bis(carboxymethoxy)-1,1'-binaphthyl, 2,2'-bis(carboxyethoxy)-1,1'-binaphthyl, and 2,2'-bis(carboxyphenoxy)-1,1'-binaphthyl), and dicarboxylic acid of a compound represented by the following formula, or an ester derivative thereof.

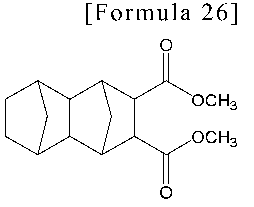

Furthermore, examples of the constituent units derived from the dihydroxy compounds (diols) that constitute polyester resins or polyester carbonate resins may include constituent units derived from: 2,2'-[1,4-phenylenebis(methyleneoxy[1,1'-binaphthalene]-2',2-diyloxy)]di(ethan-1-ol) (DBHBNABHP); spiroglycol (3,9-bis(1,1-dimethyl-2-hydroxyethyl)-2,4,8,10-tetraoxaspiro[5.5]undecane, SPG); bisphenol TMC; bisphenol A; dihydroxy compounds (diols) of alkylene glycols such as ethylene glycol, propylene glycol, butylene glycol, pentylene glycol, neopentyl glycol, and octylene glycol.

In several embodiments, the content of these other constituent units is preferably as low as possible. For example, the content of other constituent units is preferably 50% by weight or less, more preferably 30% by weight or less, and further preferably 10% by weight or less, based on the total weight of the thermoplastic resin constituting the molding waste product.

In several embodiments, the content of the thermoplastic resin comprising at least one selected from the above-described constituent unit (A), the above-described constituent unit (B), the above-described constituent unit (C), the above-described constituent unit (D), and the above-described constituent unit (E), is preferably 80% by mass or more, and more preferably 80% to 99% by mass, based on the total mass of the waste composition. When the content of the above-described resin is 80% by mass or more, it is preferable because recycling efficiency becomes high.

In several embodiments, the content of the thermoplastic resin comprising at least one selected from the constituent unit (A), the constituent unit (B), the constituent unit (C), and the constituent unit (D), is preferably 80% by mass or more, and more preferably 80% to 99% by mass, based on the total mass of the waste composition. When the content of the resin is 80% by mass or more, it is preferable because recycling efficiency becomes particularly high.

In several embodiments, the thermoplastic resin that constitutes the molding waste product preferably comprises at least one selected from the group consisting of a resin consisting of the above-described constituent unit (A) and the above-described constituent unit (B), a resin consisting of the above-described constituent unit (B) and the above-described constituent unit (C), a resin consisting of the above-described constituent unit (B) and the above-described constituent unit (D), a resin consisting of the above-described constituent unit (A), a resin consisting of the above-described constituent unit (B), a resin consisting of the above-described constituent unit (C), and a resin consisting of the above-described constituent unit (D). Such a resin is excellent in term of optical properties such as refractive index.

In several embodiments, the thermoplastic resin that constitutes the molding waste product is represented by any one of the following formulae (I-1), (1-2), (I-3), (II-1), (11-2), (II-3), (II-4), (11-5), and (11-6). Such a resin is excellent in term of optical properties such as refractive index. 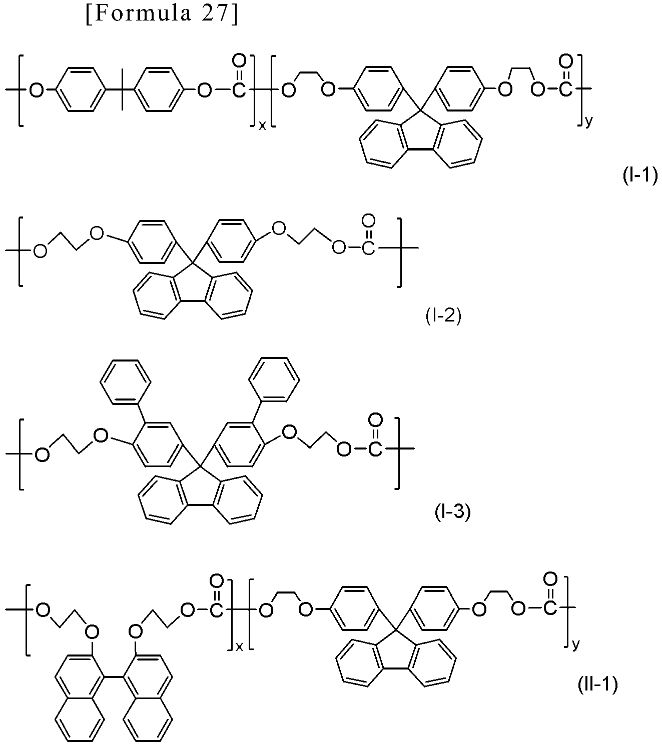 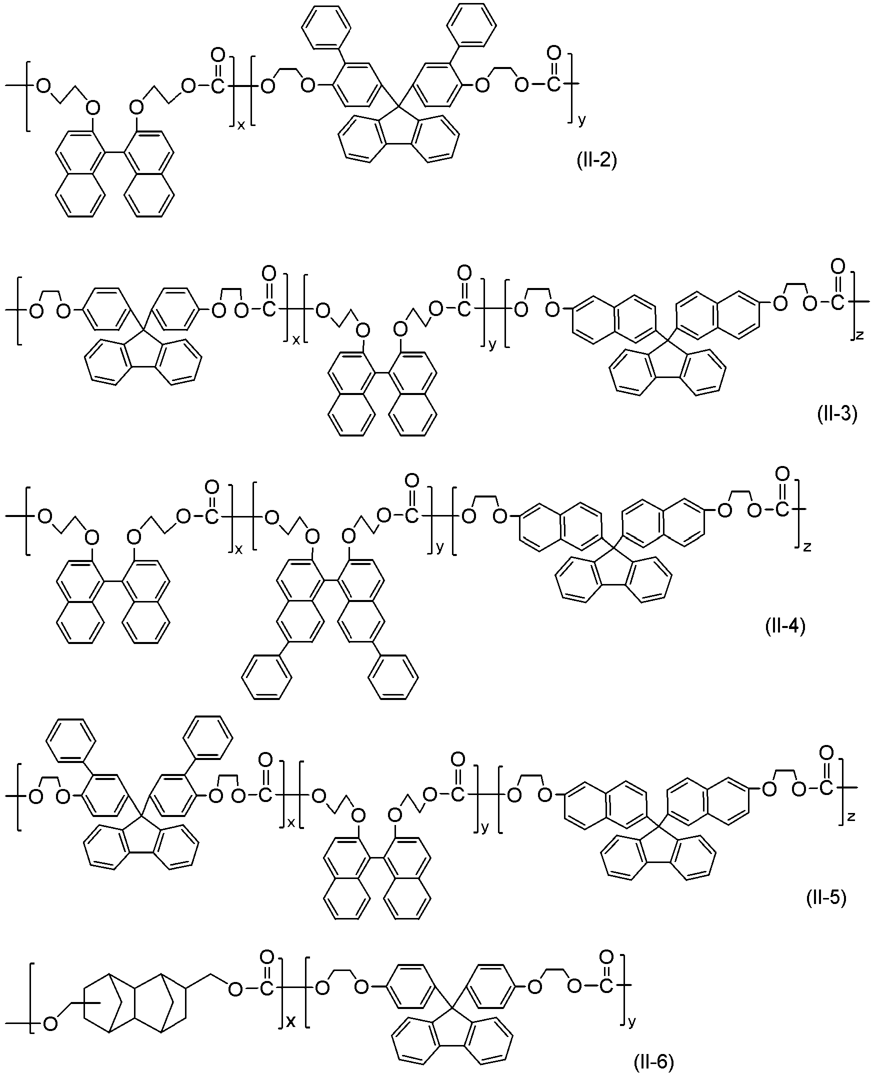 wherein x, y, and z each represent the number of repeating units. Herein, x, y, and z are not particularly limited, and they may be determined depending on the desired molecular weight and the monomer ratio. x, y, and z are each independently an integer of, for example, 1 to 100, preferably an integer of 1 to 10.

The weight average molecular weight (Mw) of the thermoplastic resin comprising at least one selected from the constituent unit (A), the constituent unit (B), the constituent unit (C), and the constituent unit (D), is not particularly limited, and it is preferably 10000 to 70000, and more preferably 15000 to 50000. When the weight average molecular weight (Mw) is 10,000 or more, it is preferable because it can retain an appropriate strength as a molded body of, for example, a resin for optical lenses. On the other hand, when the weight average molecular weight (Mw) is 70,000 or less, it is preferable because it can retain an appropriate fluidity during resin molding and can improve moldability. It is to be noted that, in the present description, the "weight average molecular weight (Mw)" means the weight average molecular weight relative to polystyrene calculated by gel permeation chromatography (GPC).

In several embodiments, the thermoplastic resin that constitutes the molding waste product is a resin (e.g., a polyester resin) comprising the constituent unit (E) derived from the monomer represented by the above formula (5) (e.g., at least one constituent unit selected from the group consisting of the above formula (5-1), formula (5-2), and formula (5-3)) and a constituent unit derived from a dihydroxy compound (diol). Examples of the dihydroxy compound (diol) may include the constituent unit (A), constituent unit (B) and constituent unit (D) derived from the dihydroxy compounds (diols) represented by the above formula (1), formula (2) and/or formula (4), and/or constituent units derived from dihydroxy compounds (diols) as described below, from which other constituent units are derived.

Moreover, the thermoplastic resin may further comprise constituent units of other resins (a polyester resin, a polyester carbonate resin, a polyolefin resin, etc.), as well as the constituent unit (E) derived from the monomer represented by the above formula (5) (e.g., at least one constituent unit selected from the group consisting of the above formula (5-1), formula (5-2), and formula (5-3)) and the constituent unit derived from the above-described dihydroxy compound (diol).

In several embodiments, the thermoplastic resin that constitutes the molding waste product comprises a constituent unit derived from 9,9-bis(2-carboxyethyl)fluorene (or the ester or acid halide thereof).

For instance, the thermoplastic resin that constitutes the molding waste product may be a resin comprising at least one constituent unit selected from the group consisting of the following formula (iii-a1) to formula (iii-a5).

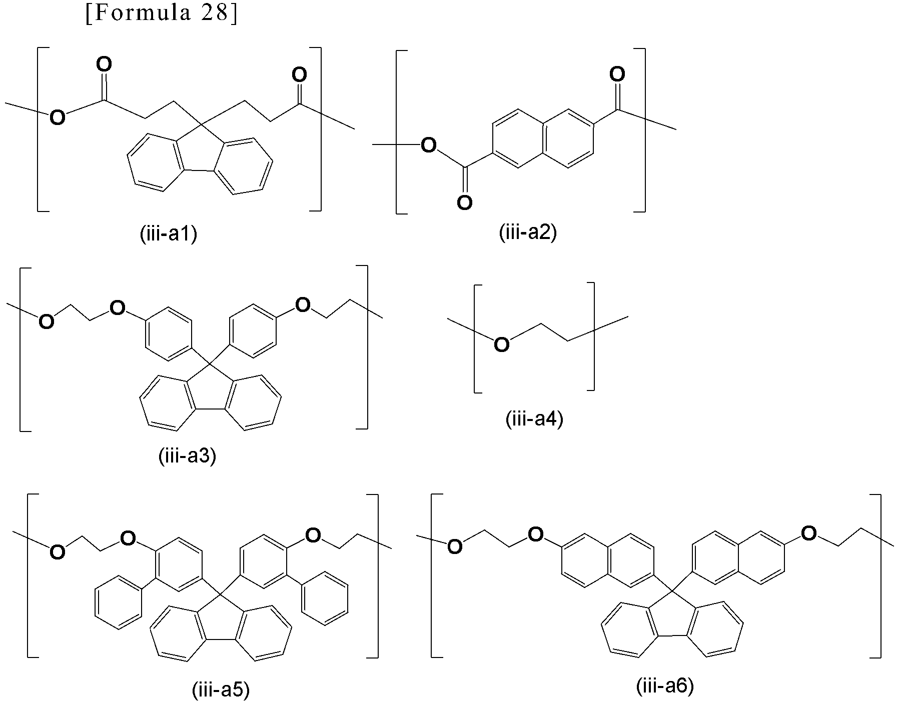

Among the constituent units represented by the above formulae (iii-a1) to (iii-a6), the formula (iii-a1) and the formula (iii-a2) represent constituent units derived from dicarboxylic acids (or the esters or acid halides thereof), and the formula (iii-a3), the formula (iii-a4), the formula (iii-a5), and the formula (iii-a6) represent constituent units derived from dihydroxy compounds (diols), and the formula (iii-a1) represents a constituent unit derived from 9,9-bis(2-carboxyethyl)fluorenes (or the esters or acid halides thereof).

For instance, the thermoplastic resin is selected from the group consisting of the after-mentioned (III-1), (III-2), and (III-3). Such a resin is excellent in term of optical properties such as refractive index.

### (III-1) Resin comprising the constituent unit represented by the formula (iii-a1), the constituent unit represented by the formula (iii-a2), the constituent unit represented by the formula (iii-a3), and the constituent unit represented by the formula (iii-a4)

In several embodiments, the thermoplastic resin is a polyester resin, in which an ester bond is formed between the constituent unit represented by the formula (iii-a1) and the constituent unit represented by the formula (iii-a2), and the constituent unit represented by the formula (iii-a3) and the constituent unit represented by the formula (iii-a4). The ratio of individual constituent units is not particularly limited. In addition, the thermoplastic resin may comprise other constituent units.

In one embodiment, the thermoplastic resin is a copolymerized polyester resin obtained from naphthalene dicarboxylic acid, BPEF, fluorene dipropionic acid ester, and ethylene glycol.

### (III-2) Resin comprising the constituent unit represented by the formula (iii-a1), the constituent unit represented by the formula (iii-a2), the constituent unit represented by the formula (iii-a4), and the constituent unit represented by the formula (iii-a5)

In several embodiments, the thermoplastic resin is a polyester resin, in which an ester bond is formed between the constituent unit represented by the formula (iii-a1) and the constituent unit represented by the formula (iii-a2), and the constituent unit represented by the formula (iii-a4) and the constituent unit represented by the formula (iii-a5). The ratio of individual constituent units is not particularly limited. In addition, the thermoplastic resin may comprise other constituent units.

In one embodiment, the thermoplastic resin is a copolymerized polyester resin obtained from naphthalene dicarboxylic acid, BPPEF, fluorene dipropionic acid ester, and ethylene glycol.

### (III-3) Resin comprising the constituent unit represented by the formula (iii-a1), the constituent unit represented by the formula (iii-a4), and the constituent unit represented by the formula (iii-a6)

In several embodiments, the thermoplastic resin is a polyester resin, in which an ester bond is formed between the constituent unit represented by the formula (iii-a1), and the constituent unit represented by the formula (iii-a4) and the constituent unit represented by the formula (iii-a6). The ratio of individual constituent units is not particularly limited. In addition, the thermoplastic resin may comprise other constituent units.

In one embodiment, the thermoplastic resin is a copolymerized polyester resin obtained from BNEF, fluorene dipropionic acid ester, and ethylene glycol.

Moreover, in one embodiment, the thermoplastic resin is a copolymerized polyester resin obtained from BNEF, BPEF, fluorene dipropionic acid ester, and ethylene glycol.

Besides, the weight average molecular weight (Mw) of each of the resins described in the above (III-1) to (III-3) is not particularly limited, and it is preferably 10,000 to 70,000, and more preferably 15000 to 50000. When the weight average molecular weight (Mw) is 10,000 or more, it is preferable because it can retain an appropriate strength as a molded body of, for example, a resin for optical lenses, etc. On the other hand, when the weight average molecular weight (Mw) is 70,000 or less, it is preferable because it can retain an appropriate fluidity during resin molding and can improve moldability.

### (Additives/Decomposition products)

The additives constituting the molding waste product are not particularly limited, and known additives are used.

In addition, examples of the decomposition products of the resins constituting the molding waste product may include monomers, dimers, copolymers, and oligomers of resins or impurity resins having at least one of the constituent units (A) to (E) selected from the group consisting of the general formulae (1) to (5), aryl alcohols such as phenol, carbonic acid diesters such as diphenyl carbonate, modified monomers such as those shown in the following formulae (A-1) and (A-2), and modified resins having partial structures shown in the following formulae (B-1) and (B-2).

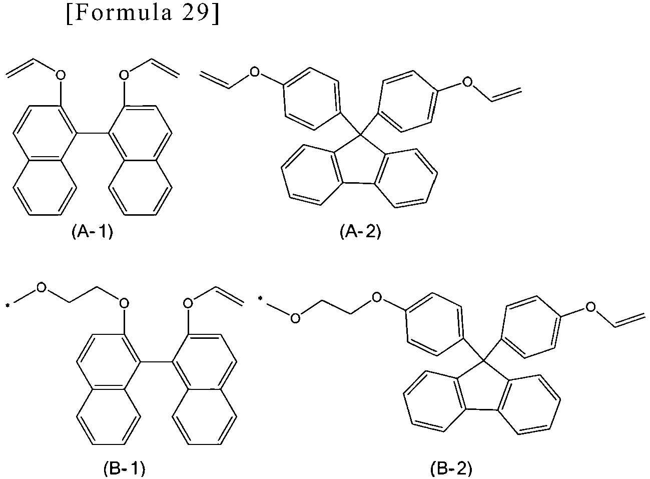

Hereafter, individual steps will be described in detail.

In several embodiments, The method for producing a recycled resin comprises, as optional steps, a vibration transport step, a separation and recovery step, and a recycled resin production step.

### 1. Vibration transport step

The vibration transport step is a step of supplying a waste composition containing the molding waste product to a vibration transport floor, and vibration-transporting the waste composition.

When the molding waste products have a structure that is easily entangled, such as, for example, a runner part, the molding waste products may be easily to be entangled with each other. Therefore, when a waste composition containing entangled molding waste products intends to be fed into a crusher, there are cases where feeding into the crusher is hindered and recycling efficiency becomes low. In such a case, by going through a vibration transport step before the separation and recovery step, the entanglement of the molding waste products can be eliminated or reduced, and as a result, a recycled resin can be produced from the molding waste products with excellent recycling efficiency.

The vibration transport step is any given step that is performed as necessary. If the entanglement of the molding waste products is a few or non-existent, the vibration transport step can be omitted. When the molding waste product comprises a runner part, it is desirable to perform the vibration transport step before the separation and recovery step.

### (Vibration transport floor)

The vibration transport floor is not particularly limited, as long as it can eliminate or reduce the entanglement between the molding waste products contained in the waste composition by vibration-transporting the waste composition. Specifically, the vibration transport floor may be a plate-like member, a conveyor, a turntable, or any other shapes. Among these, the vibration transport floor is preferably a plate-like member or a conveyor, and is more preferably a conveyor. In this case, the size of the vibration transport floor may be set as appropriate. Besides, the vibration transport floor may be installed parallel to the horizontal plane, or may be installed at an incline.

When the vibration transport floor is a plate-like member or a conveyor, the width of the vibration transport floor is preferably 5 cm to 5 m, more preferably 10 cm to 3 m, and further preferably 20 cm to 1 m.

In addition, the length of the vibration transport floor is preferably 50 cm to 30 m, more preferably 1 to 10 m, and further preferably 1 to 5 m.

The vibration transport floor is usually equipped with a vibration mechanism (e.g., an induction motor, a resonator, a vibration motor, etc.).

Moreover, the vibration transport floor may also be equipped with a feeder for supplying the waste composition to the vibration transport floor, a vibration control mechanism for controlling the vibration mechanism (continuous drive, intermittent drive, variable speed drive, etc.), and a discharge mechanism for removing the waste composition after the vibration transport floor.

### (Vibration transport)

By vibration-transporting the waste composition on the vibration transport floor, it is possible to eliminate or reduce the entanglement between the molding waste products contained in the waste composition.

The vibration frequency of the vibration transport floor is preferably 1 to 1000 Hz, more preferably 5 to 500 Hz, further preferably 10 to 100 Hz, and still further preferably 30 to 80 Hz. When the vibration frequency of the vibration transport floor is within the above-described range, it is preferable because the entanglement is easily eliminated, the amount of energy used is suppressed, and operation efficiency is favorable.

The amount of the waste composition supplied is, relative to the width of the vibration transport floor, preferably 100 to 5000 g/m, and more preferably 100 to 2000 g/m. From the viewpoint of being capable of effectively eliminating or reducing the entanglement, the amount of the waste composition supplied is further preferably 100 to 1500 g/m, particularly preferably 100 to 1000 g/m, and from the viewpoint of high production efficiency, it is most preferably 500 to 1000 g/m.

The speed of supplying the waste composition to the vibration transport floor is preferably 5 to 100 g/sec, more preferably 5 to 60 g/sec, and from the viewpoint of being capable of effectively eliminating or reducing the entanglement, it is further preferably 5 to 40 g/sec, and from the viewpoint of production efficiency, it is still further preferably 15 to 40 g/sec.

In one embodiment, it is preferable that the amount of the waste composition supplied is 100 to 2000 g/m relative to the width of the vibration transport floor, and that the speed of supplying the waste composition to the vibration transport floor is preferably 5 to 40 g/sec; it is more preferable that the amount supplied is 100 to 1500 g/m and that the supply speed is 5 to 40 g/sec; and it is further preferable that the amount supplied is 500 to 1000 g/m and that the supply speed is 15 to 40 g/sec.

The specific gravity of the molding waste product is preferably 0.9 to 1.5, more preferably 0.9 to 1.4, further preferably 1.0 to 1.4, still further preferably 1.0 to 1.3, and particularly preferably 1.1 to 1.3. When the specific gravity of the molding waste product is within the above-described range, it is preferable because it is easy to eliminate or reduce the entanglement between the molding waste products by vibration transportation.

### 2. Separation and recovery step

The separation and recovery step is a step of irradiating a laser light to a molding waste product consisting of a thermoplastic resin, identifying the type of the thermoplastic resin of the molding waste product based on a Raman scattering light scattered from the molding waste product, and separating and recovering the molding waste product.

When the molding waste products of a thermoplastic resin is recycled, a generated molding waste product is recovered and collected, and a recycling processing is performed on the resulting waste composition. It is desirable to recover a molding waste product depending on the type of a resin. However, there is a case where the waste composition may be a mixture of multiple types of resins. As a result, if the waste composition is used as is in the recycling processing, there is a risk that the recycling efficiency and the quality of the recycled resin will be reduced. According to the separation and recovery step of the present embodiment, before recycling, the molding waste products are separated and recovered depending on the types and grades of thermoplastic resins, by a simple method utilizing a laser light. As a result, it becomes possible to produce a recycled resin with excellent recycling efficiency and/or excellent quality.

Therefore, another embodiment of the present invention also relates to a method for separating and recovering a molding waste product consisting of a thermoplastic resin, the method comprising the separation and recovery step. That is, the method for separating and recovering a molding waste product according to one embodiment of the present invention comprises a step of irradiating a laser light to a molding waste product consisting of a thermoplastic resin, identifying the type of the thermoplastic resin of the molding waste product based on a Raman scattering light scattered from the molding waste product, and separating and recovering the molding waste product, wherein the thermoplastic resin comprises at least one selected from the constituent unit (A) derived from the monomer represented by the above general formula (1), the constituent unit (B) derived from the monomer represented by the above general formula (2), the constituent unit (C) derived from the monomer represented by the above general formula (3), the constituent unit (D) derived from the monomer represented by the above general formula (4), and the constituent unit (E) derived from the monomer represented by the above general formula (5). In the separation and recovery method of the present embodiment, the above-described vibration transport step may be carried out before the separation and recovery step.

Figure 4 is a view schematically showing a method for separating and recovering a molding waste product in the separation and recovery step according to one embodiment of the present invention.

As shown in Figure 4, with regard to the separation and recovery of a molding waste product, the type of a thermoplastic resin that constitutes a molding waste product 12 is identified, and then, the separation and recovery of the molding waste product 12 is performed for each type of thermoplastic resin according to the identification results.

The separation and recovery step is preferably performed continuously on a conveyor. For example, as shown in Figure 4, the molding waste product 12 consisting of a thermoplastic resin is supplied onto a conveyor such as a belt conveyor 16, and the separation and recovery step is performed continuously on the belt conveyor 16.

The conveyor is not particularly limited, as long as it can transport the molding waste product 12, and in addition to a belt conveyor, a belt loader or the like can be used.

It is preferable that the molding waste products 12 are supplied onto the conveyor at equal intervals. By supplying the molding waste products at equal intervals, the accuracy of identification of a thermoplastic resin, and separation and recovery thereof can be improved.

It is preferable that the molding waste products 12 are supplied individually onto the conveyor in a disentangled state. If entanglement occurs between the molding waste products 12, it is preferable to carry out the above-described vibration transport step or the like and then to carry out the separation and recovery step in a state the entanglement between the molding waste products is disentangled. Supplying the molding waste products at equal intervals onto the conveyor is carried out, for example, by a system (e.g., an arm-type robot or a picking robot) that places the disentangled molding waste products onto the conveyor at equal intervals after the vibration transport step.

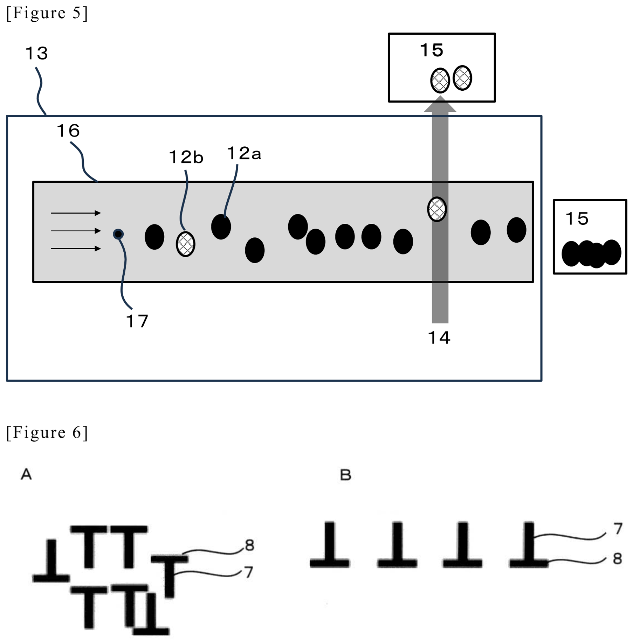

It is preferable that the molding waste products 12 are supplied onto the conveyor in the same shape orientation. By arranging the products with the same shape, misrecognition is reduced and prevented. For example, as shown in Figure 3, a molding waste product 12 has an axial sprue part 7 and two or more runner parts 8 that extend evenly in the circumferential direction from the lower part of the axis of the sprue part 7. The molding waste product 12 comprising such an axial sprue part 7 and runner parts 8 with a branched structure has an approximately T-shape when it is seen from the side. It is preferable that such approximately T-shaped molding waste products 12 are arranged on the conveyor in the same inverted T-shape orientation, as shown in Figure 6B.

Specifically, it is preferable to arrange the molding waste products 12 are arranged on a conveyor in aligned orientation, so that the tips of the axial sprue parts 7 face upward. By arranging the molding waste products in aligned orientation, the laser light irradiation is focused, the identification rate is improved, and the identification rate becomes close to 100%. On the other hand, if the molding waste products 12 are arranged randomly without aligning the orientation, it may not be able to focus and the identification accuracy may decrease in some cases.

In addition, as shown in Figure 6B, it is preferable to arrange the molding waste products 12, so that the runner parts 8 having a branched structure that extend evenly in the circumferential direction, are allowed to come into contact with the conveyor. By arranging in this way, the molding waste products 12 are stably arranged on the conveyor, and the molding waste products 12 can be prevented from falling or moving during transportation by the conveyor, thereby improving the identification accuracy. On the other hand, if the molding waste products 12, which are approximately T-shaped, are tilted sideways, that is, arranged so that the tip of the axial sprue part 7 is allowed to come into contact with the belt conveyor, the molding waste products 12 may fall or move during transportation on the belt conveyor, resulting in a decrease in identification accuracy in some cases.

When the separation and recovery of molding waste products having various shapes are performed, it is preferable to arrange the molding waste products on the conveyor, so that the convex part or acute-angled part thereof becomes the upper surface.

In several embodiments, if the above-described vibration transport step is present, the molding waste products are arranged on the conveyor in aligned orientation of the shape, after the vibration transport step.

Such arrangement of the products on the conveyor in such a uniform orientation is performed by, for example, an arm-type robot or a picking robot.

The interval between the molding waste products on the conveyor is preferably 1 to 30 cm, more preferably 1 to 20 cm, and further preferably 1 to 10 cm, in the conveyor's travel direction, from the viewpoint of preventing misrecognition.

The interval between the molding waste products on the conveyor is preferably 1 to 30 cm, more preferably 1 to 20 cm, and further preferably 1 to 10 cm, in the conveyor's width direction (the direction perpendicular to the conveyor's travel direction), from the viewpoint of reducing and preventing misrecognition.

The speed of supplying the molding waste products to the conveyor is not particularly limited, and it is preferably 0.5 to 5 pieces/second, more preferably 0.5 to 4 pieces/second, and further preferably 1 to 3 pieces/second, from the viewpoint of reducing and preventing misrecognition.

The speed of the conveyor is not particularly limited, and it is preferably 10 to 100 m/sec, more preferably 20 to 80 m/sec, and further preferably 30 to 50 m/sec.

The speed of the separation and recovery process of the molding waste products is not particularly limited, and it is preferably 0.2 to 3.0 pieces/second, and more preferably 0.3 to 2.0 pieces/second. Besides, the "speed of the separation and recovery process" refers to the processing speed from irradiation of the molding waste product with a laser light to identification of the type of thermoplastic resin in the molding waste product and the separation and recovery thereof.

It is to be noted that it is naturally adequate if the separation and recovery step may be performed discontinuously.

### (Identification)

In the embodiment of the present invention, Raman scattering spectrum is utilized to identify the thermoplastic resin that constitutes the molding waste product in the separation and recovery step. The molding waste product is irradiated with a laser light, and the type of the thermoplastic resin that constitutes the molding waste product is identified based on a Raman scattering light scattered from the molding waste product. In identification of the resin using such a Raman scattering light, the thermoplastic resins constituting the molding waste products, in which the structures of constituent units are different, can be mutually identified. By using this identification method based on a Raman scattering light, it becomes possible to separate and recover different types of thermoplastic resins with high identification accuracy, thereby improving the recycling efficiency and/or the quality of recycled resins.

Identification of the types of resins utilizing a Raman scattering light can be performed, for example, by using a Raman scattering identification device 13, as shown in Figure 4. The molding waste product 12 is irradiated with a laser light (not shown in the figure) by using the Raman scattering identification device 13, and the type of the thermoplastic resin of the molding waste product is identified based on a Raman scattering light scattered from the molding waste product.

The Raman scattering identification device typically has a means for irradiating the molding waste product with a laser light, measuring the Raman scattering spectrum and acquiring Raman scattering information, and an identification means for making analysis using the measured Raman scattering information and known Raman scattering information (the Raman scattering information of a reference resin) to identify the type of the resin that constitutes the molding waste product. For example, first, the Raman scattering information of the known resin as an identification target (the Raman scattering information of the reference resin) has previously been acquired. Subsequently, the molding waste product, which is a resin to be identified, is irradiated with a laser light, the Raman scattering spectrum is measured, and the Raman scattering information of each resin is acquired. Then, the type of the resin is identified by comparing the Raman scattering information of the reference resin with the Raman scattering information of the measured resin to be identified.

Figure 4 shows a view of the Raman scattering identification device 13, which is seen from the top. As shown in Figure 4, the Raman scattering identification device 13 has a laser light irradiation part (not shown in the figure) located above the belt conveyor 16 and a sensor 17 located above the belt conveyor 16. A laser light is irradiated from the laser light irradiation part to the molding waste products (12a,12b) on the belt conveyor 16, and the reflected Raman light is captured by the sensor 17 to measure the Raman scattering spectrum and acquire Raman scattering information. The Raman scattering information is processed by a Raman scattering information analysis part (not shown in the figure) equipped in the Raman scattering identification device 13 to identify the type of the resin.

Such a Raman scattering identification device is disclosed, for example, in Japanese Patent No. 4203916, JP Patent Publication (Kokai) No. 2009-092458 A, JP Patent Publication (Kokai) No. 2011-214917 A, JP Patent Publication (Kokai) No. 2012-42248 A, etc., and these devices can be preferably used also in the production method of the present embodiment.

In the production method of the present embodiment, as described above, the thermoplastic resin comprises at least one selected from the constituent unit (A) derived from the monomer represented by the general formula (1), the constituent unit (B) derived from the monomer represented by the general formula (2), the constituent unit (C) derived from the monomer represented by the general formula (3), the constituent unit (D) derived from the monomer represented by the general formula (4), and the constituent unit (E) derived from the monomer represented by the general formula (5). By using the identification method based on the Raman scattering light to recognize and identify differences in the intensity and pattern of the scattered light, it becomes possible to highly accurately and quickly identify thermoplastic resins comprising at least one type selected from the above-described constituent unit (A), constituent unit (B), constituent unit (C), constituent unit (D), and constituent unit (E), which differ in terms of the types of constituent units in the resins and the ratio of multiple constituent units when they are comprised.

### (Separation and recovery)

As described above, after the types of the thermoplastic resins of the molding waste products have been identified, the molding waste products are separated and recovered according to the types of thermoplastic resins that constitute the molding waste products, depending on the identification results. If the type of the thermoplastic resin of the molding waste product matches the resin as a recovery target, it is collected as molding waste product that is a recovery target. On the other hand, if the type of the thermoplastic resin of the molding waste product does not match the resin as a recovery target, it is excluded from the molding waste product as a recovery target, and as necessary, it is collected as a molding waste product that is not a recovery target. In several embodiments, the separation and recovery step comprises collecting the molding waste product as a recovery target by spraying compressed air, and/or removing the molding waste product that is not a recovery target by spraying compressed air.

For example, as shown in Figure 4, the Raman scattering identification device has a mechanism (means) for blowing out compressed air 14 in response to the identification results based on the Raman scattering light. With regard to separation and recovery, in a case where the type of the thermoplastic resin that constitutes the molding waste product matches the resin as a recovery target in response to the identification results based on the Raman scattering light, by blowing out the compressed air 14, the molding waste product is collected as a molding waste product 12a as a recovery target in a recovery container 15 installed outside the Raman scattering identification device 13.

Although it is not shown in the figure, multiple molding waste products may be recovered in response to the identification results based on the Raman scattering light. For example, a first type of molding waste product 12a as a recovery target (identified product) is collected in the recovery container 15 by blowing out compressed air 14 in response to the identification results based on Raman scattering light, and then, on the side downstream of the belt conveyor, a second type of molding waste product 12a as a recovery target (identified product) is collected in the recovery container 15, and on the side further downstream, third and subsequent molding waste products 12a as recovery targets (identified products) can also be collected successively.

Figure 5 is a view schematically showing a method for separating and recovering a molding waste product in a separation and recovery step according to another embodiment of the present invention.

In the embodiment shown in Figure 5, in response to the identification results based on the Raman scattering light, in a case where the type of resin of the molding waste product does not match the resin as a recovery target, the molding waste product is discharged outside the belt conveyor 16 (outside the Raman scattering identification device 13) as a molding waste product 12b that is not a recovery target (non-identified product) by blowing out compressed air 14, and a molding waste product 12a as a recovery target (identified product) is collected downstream of the belt conveyor 16.

The molding waste product 12a as a recovery target and the molding waste product 12b that is not a recovery target (non-identified product) may also be separated and collected by combining the recovery mechanism shown in Figure 4 with the recovery mechanism shown in Figure 5.

In Figure 4 and Figure 5, the compressed air 14 is used to collect the molding waste product 12a as a recovery target and the molding waste product 12b that is not a recovery target (non-identified product). However, the molding waste product 12a as a recovery target and the molding waste product 12b that is not a recovery target (non-identified product) may also be separated and collected by blowing out inert gas instead of the compressed air 14.

### 3. Recycled resin production step

The recycled resin production step is a step of obtaining a recycled resin from the separated and recovered molding waste product as described above. Since the molding waste product is obtained by the above-described separation and recovery step, it comprises the thermoplastic resins of the same type. Therefore, in the recycled resin production step, it is possible to produce a recycled resin of excellent quality from the molding waste product with high recycling efficiency.

The recycled resin production step is not particularly limited, as long as a recycled resin can be obtained from the separated and recovered molding waste product, and a known method can be adopted as appropriate. In one preferred embodiment, the recycled resin production step comprises a step of crushing the molding waste product (crushing step), a step of removing impurities contained in the molding waste product (impurity-removing step), and a step of producing a recycled resin (resin production step).

### (Crushing step)

The crushing step is a step of crushing the molding waste product.

The molding waste product can be processed into a shape suitable for recycling by crushing it.

The crushing method is not particularly limited, and any of compression, impact, shear, and friction methods may be used.

Examples of the crusher that can be used herein may include: coarse crushers such as a jaw crusher, a gyratory crusher, an impact crushers, a single-shaft crusher, and a twin-shaft crusher; medium crushers such as a roll crusher, an edge runner, a disintegrator, a SAG (Semi-Autogenous Grinding) mill, a crushing roll, a hammer mill, and a roller mill; and fine crushers such as a bead mill, a ball mill, a vibrating ball mill, a rod mill, a jet mill, and a planetary mill. Of these, it is preferable to use coarse crushers, and it is more preferable to use a single-shaft crusher and a twin-shaft crusher. Specific crushers may include the powerful crushers 35-560, 35-720, 55-770, and 55-1050 (manufactured by Tanaka Co., Ltd.), and the low-speed crushers KGA-250 and KGA-350 (manufactured by KAWATA MFG. CO., LTD.). It is to be noted that the aforementioned crushers may be used alone or in combination of two or more types.

### (Impurity-removing step)

The impurity-removing step is a step of removing impurities comprised in the molding waste product. The molding waste product may comprise two or more types of resins. In addition, the molding waste product may also comprise additives, decomposition products of resins, decomposition products of additives, etc., in some cases. From the viewpoint of producing a recycled resin with excellent physical properties, it is preferable to remove impurities from the molding waste product.

The method of removing impurities comprised in the molding waste product is not particularly limited, and examples thereof may include a method of utilizing the difference in physical properties between the resin of interest and the impurities, and a method of utilizing the difference in chemical properties between the resin of interest and the impurities.

Examples of the method of utilizing the difference in physical properties between the resin of interest and the impurities may include a method of using magnetic force, a method of using wind force, a method of using a sieve, a method of using specific gravity, and a method of using buoyancy.

For example, when the impurities are metals, the impurities can be removed by a method of using magnetic force. Specifically, by using a magnet or a metal detector, metals that may be contained in the waste composition can be removed.

Other methods that can be applied herein may include a method of removing impurities by utilizing the difference in buoyancy, in which salt water is used, a method of removing impurities by utilizing the difference in adsorption power, in which activated carbon is used, and a method of removing impurities by utilizing the difference in specific gravity, in which a hydrocyclone treatment is used.

The method of utilizing the difference in chemical properties between the resin of interest and the impurities may be a method of depolymerizing the resin of interest.

For instance, the resin having at least one constituent unit selected from the group consisting of the above-described constituent unit (A), the above-described constituent unit (B), the above-described constituent unit (C), the above-described constituent unit (D), and the above-described constituent unit (E) is depolymerized by treating it with an alkaline aqueous solution, so that at least one monomer compound (depolymerized monomer) selected from the group consisting of the above general formulae (1) to (5) can be obtained.

When the molding waste product comprises other resins that are not depolymerized (e.g., impurity resins such as cyclic polyolefins) in addition to the thermoplastic resin having at least one constituent unit selected from the group consisting of the above-described constituent units (A) to (E), if the molding waste product is treated with an alkaline aqueous solution, it results in only the resin having at least one constituent unit selected from the group consisting of the above-described constituent units (A) to (E) that is depolymerized. Since the physical properties of the resulting monomer compound (depolymerized monomer) are significantly different from those of other resins (impurity resins) that are not depolymerized, such other resins (impurity resins) that are not depolymerized can be removed.

Besides, the above-described alkali treatment is not particularly limited, and can be carried out by a known method. For example, the alkali treatment can be carried out by adding the waste composition and an alkaline aqueous solution to a reaction solvent and allowing them to react with one another.

The above-described reaction solvent is not particularly limited, and examples of the reaction solvent may include an aliphatic hydrocarbon solvent and an aromatic hydrocarbon solvent.

The aliphatic hydrocarbon solvent is not particularly limited, and examples of the aliphatic hydrocarbon solvent may include pentane, hexane, heptane, octane, nonane, decane, cyclohexane, and cyclodecane.

The aromatic hydrocarbon solvent is not particularly limited, and examples of the aromatic hydrocarbon solvent may include toluene, xylene, and mesitylene.

Among these, the reaction solvent is preferably an aromatic hydrocarbon solvent, and is more preferably toluene or xylene. It is to be noted that the aforementioned reaction solvents may be used alone or in combination of two or more types.

The amount of the reaction solvent used is not particularly limited, and it is preferably 30 to 2000 parts by mass, more preferably 40 to 1500 parts by mass, and further preferably 100 to 1000 parts by mass, based on 100 parts by mass of the waste composition. When the amount of reaction solvent used is 30 parts by mass or more, it is preferable because the organic components of the waste composition are sufficiently dissolved in the reaction solvent and the reaction efficiency becomes high. On the other hand, when the amount of reaction solvent used is 2000 parts by mass or less, it is preferable because the reaction time is shortened.

In several embodiments, the above-described alkaline aqueous solution comprises a metal hydroxide and water.

The metal hydroxide is not particularly limited, and examples thereof may include: hydroxides of alkali metals, such as sodium hydroxide, potassium hydroxide, and rubidium hydroxide; and hydroxides of alkaline earth metals, such as calcium hydroxide and barium hydroxide. Of these, the metal hydroxide is preferably a hydroxide of an alkali metal, more preferably sodium hydroxide or potassium hydroxide, and further preferably potassium hydroxide. It is to be noted that these metal hydroxides may be used alone or in combination of two or more types.

The amount of the metal hydroxide used is not particularly limited, and it is preferably 1.5 to 10 moles, more preferably 2 to 8 moles, and further preferably 2 to 4 moles, per mole of carbonate bond in a polycarbonate resin. When the amount of the metal hydroxide used is 1.5 moles or more, it is preferable because the depolymerization is sufficiently performed. On the other hand, when the amount of the metal hydroxide used is 10 moles or less, it is preferable because the production cost is reduced.

The concentration of the metal hydroxide in the alkaline aqueous solution is preferably 10% to 60% by mass, more preferably 15% to 55% by mass, and further preferably 20% to 50% by mass, based on the total mass of the alkaline aqueous solution. When the concentration of the metal hydroxide is 10% by mass or more, it is preferable because the reaction rate of the depolymerization becomes high. On the other hand, when the concentration of the metal hydroxide is 60% by mass or less, it is preferable because the alkaline aqueous solution does not become a slurry and the reaction proceeds smoothly.

The processing temperature (the reaction temperature of depolymerization) is not particularly limited, and it is preferably 120°C or lower, more preferably 100°C or lower, and further preferably 30°C to 90°C. When the processing temperature is 120°C or lower, it is preferable because it can prevent side reactions.

### < Resin production step >

The resin production step is a step of producing a recycled resin.

In the above-described impurity-removing step, when impurities are removed by the method of utilizing the difference in physical properties between the resin of interest and the impurities, there is no change in the configuration of the resin of interest. Accordingly, the resin obtained by removing impurities is a recycled resin.

On the other hand, when impurities are removed by the method of utilizing the difference in chemical properties between the resin of interest and the impurities, a recycled resin can be produced by polymerizing a depolymerization monomer of the resin of interest. In this case, the produced recycled resin may be identical to the resin of interest comprised in the molding waste product, or may be different from the resin of interest.

The method of polymerizing the depolymerization monomer of the resin of interest to produce a recycled resin is not particularly limited, and the resin can be produced by a known method.

For example, when the depolymerization monomer is at least one monomer compound selected from the group consisting of the above-described general formulae (1) to (4), a dihydroxy compound (diol) represented by the above-described formulae (1), (2) and/or (4) and a carbonic acid diester are treated by a solution condensation method in the presence of a basic compound catalyst and/or a transesterification catalyst, or in the absence of a catalyst, so that a polycarbonate resin can be produced as a recycled resin.

Moreover, a dihydroxy compound (diol) represented by the formula (1), the formula (2) and/or the formula (4), a monomer compound represented by the formula (3), and a carbonic acid diester are treated by a solution condensation method in the presence of a basic compound catalyst and/or a transesterification catalyst, or in the absence of a catalyst, so that a polyester carbonate resin can be produced as a recycled resin.

Furthermore, a dihydroxy compound (diol) represented by the formula (1), the formula (2) and/or the formula (4), and a dicarboxylic acid (ester) compound, are reacted with each other in the presence of a basic compound catalyst and/or a transesterification catalyst, or in the absence of a catalyst, so that a polyester resin can be produced as a recycled resin.

Otherwise, a dihydroxy compound is reacted with a dicarboxylic acid (ester) compound represented by the formula (3) in the presence of a basic compound catalyst and/or a transesterification catalyst, so that a polyester resin can be produced as a recycled resin.

Otherwise, a dihydroxy compound is reacted with a dicarboxylic acid (ester) compound represented by the formula (5) in the presence of a basic compound catalyst and/or a transesterification catalyst, so that a polyester resin can be produced as a recycled resin.

In the above, together with compounds, which induce the constituent units represented by the general formulae (1) to (5), and a carbonic acid diester, compounds which induce constituent units of other polycarbonate resins, compounds which induce constituent units of other resins (a polyester resin, a polyester carbonate resin, and a polyolefin resin), etc. can be used in combination.

The above-described carbonic acid diester is not particularly limited, and examples thereof may include diphenyl carbonate, ditolyl carbonate, bis(chlorophenyl) carbonate, m-cresyl carbonate, dimethyl carbonate, diethyl carbonate, dibutyl carbonate, and dicyclohexyl carbonate. Of these, diphenyl carbonate is preferable.

The amount of the carbonic acid diester used is preferably 0.97 to 1.20 moles, more preferably 0.98 to 1.10 moles, and further preferably 1.00 to 1.10 moles, per mole of the dihydroxy compound.

The basic compound catalyst is not particularly limited, and examples thereof may include an alkali metal compound, an alkaline earth metal compound, and a nitrogen-containing compound.

The above-described alkali metal compound is not particularly limited, and examples thereof may include the organic acid salts, inorganic salts, oxides, hydroxides, hydrides, or alkoxides of alkali metals. Specific examples may include sodium hydroxide, potassium hydroxide, cesium hydroxide, lithium hydroxide, sodium bicarbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium borophenylate, sodium benzoate, potassium benzoate, cesium benzoate, lithium benzoate, disodium hydrogen phosphate, dipotassium hydrogen phosphate, dilithium hydrogen phosphate, disodium phenylphosphate, the disodium salts, dipotassium salts, dicesium salts or dilithium salts of bisphenol A, and the sodium salts, potassium salts, cesium salts or lithium salts of phenol.

The above-described alkaline earth metal compound is not particularly limited, and examples thereof may include the organic acid salts, inorganic salts, oxides, hydroxides, hydrides or alkoxides of the alkaline earth metal compounds. Specific examples may include magnesium hydroxide, calcium hydroxide, strontium hydroxide, barium hydroxide, magnesium bicarbonate, calcium bicarbonate, strontium bicarbonate, barium bicarbonate, magnesium carbonate, calcium carbonate, strontium carbonate, barium carbonate, magnesium acetate, calcium acetate, strontium acetate, barium acetate, magnesium stearate, calcium stearate, calcium benzoate, and magnesium phenyl phosphate.

The above-described nitrogen-containing compound is not particularly limited, and examples thereof may include quaternary ammonium hydroxides, their salts, and amines. Specific examples may include: quaternary ammonium hydroxides having an alkyl group, an aryl group, etc., such as tetramethyl ammonium hydroxide, tetraethyl ammonium hydroxide, tetrapropyl ammonium hydroxide, tetrabutyl ammonium hydroxide, and trimethyl benzyl ammonium hydroxide; tertiary amines such as triethylamine, dimethylbenzylamine, and triphenylamine; secondary amines such as diethylamine and dibutylamine; primary amines such as propylamine and butylamine; imidazoles such as 2-methylimidazole, 2-phenylimidazole, and benzimidazole; and ammonia, tetramethylammonium borohydride, tetrabutylammonium borohydride, tetrabutylammonium tetraphenylborate and tetraphenylammonium tetraphenylborate.

Examples of the transesterification catalyst may include the salts of zinc, tin, zirconium, lead, etc. Specific examples may include zinc acetate, zinc benzoate, zinc 2-ethylhexanoate, tin(II) chloride, tin(IV) chloride, tin(II) acetate, tin(IV) acetate, dibutyltin dilaurate, dibutyltin oxide, dibutyltin dimethoxide, zirconium acetylacetonate, zirconium oxyacetate, zirconium tetrabutoxide, lead(II) acetate, and lead(IV) acetate.

The above-mentioned basic compound catalysts and transesterification catalysts may be used alone or in combination of two or more types.

The amount of the basic compound catalyst or the transesterification catalyst used (i.e., total amount if these catalysts are used in combination) is preferably 1 x 10⁻⁹ to 1 x 10⁻³ moles, and more preferably 1 x 10⁻⁷ to 1 x 10⁻⁴ moles, per mole of the dihydroxy compound.

In the melt polycondensation method, it is desirable to melt a dihydroxy compound, a dicarboxylic acid (ester) compound, and a carbonic acid diester in a reaction vessel, and then, to carry out the reaction while retaining the monohydroxy compound generated. In order to retain the monohydroxy compound, the pressure can be controlled by blocking the reaction device, or reducing or increasing the pressure.

### Examples

Hereinafter, the present invention will be specifically described in the following examples. However, these examples are not intended to limit the present invention. It is to be noted that "%" is by weight unless otherwise specified.

The device manufactured by Saimu Corporation was used as a Raman scattering light device.

The weight average molecular weight (Mw) was calculated from the retention time of GPC, using a gel permeation chromatograph (GPC) with tetrahydrofuran as a developing solvent, based on a calibration curve prepared using standard polystyrene of known molecular weight (molecular weight distribution = 1).

The molded bodies PC1, PC2, PC3, PC4, PC5, PC6 and PC7, which were used as molding waste products, are as follows.

BNEF: 9,9-bis[6-(2-hydroxyethoxy)naphthalene-2-yl]fluorene
BNE: 2,2'-bis(2-hydroxyethoxy)-1,1'-binaphthalene
BPEF: 9,9-bis(4-(2-hydroxyethoxy)phenyl)fluorene
BPPEF: 9,9-bis(4-(2-hydroxyethoxy)-3-phenylphenyl)fluorene
BPA: bisphenol A
D-NDM: decahydro-1,4:5,8-dimethanonaphthalenediol

### (1) PC1: BNEF/BNE/BPPEF

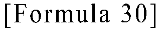

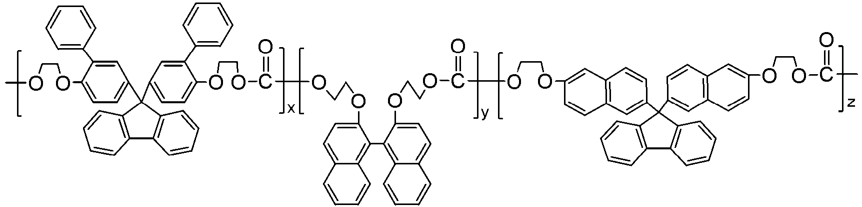

BNEF/BNE/BPPEF = x/y/x = 27.0/52.0/21.0 (mol%)
Mw = 33,000

PC1 was synthesized by the method described in International Publication WO2018/016516.

### (2) PC2: BNE/BPPEF

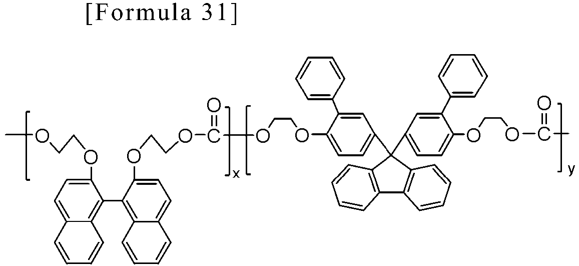

BNE/BPPEF = x/y = 45.0/55.0 (mol%)
Mw = 47,000

PC2 was synthesized by the method described in International Publication WO2014/073496.

### (3) PC3: BNE/BPEF

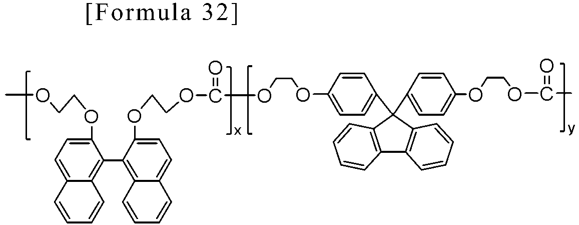

BNE/BPEF = x/y = 42.1/57.9 (mol%)
Mw = 35,000

PC3 was synthesized by the method described in International Publication WO2014/073496.

### (4) PC4: BPEF-HOMO

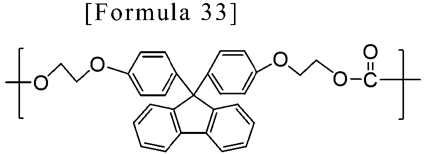

Mw = 29,000

PC4 was synthesized by the method described in Synthetic Example 2 of International Publication WO2015/166951.

### (5) PC5: BPEF/BPA

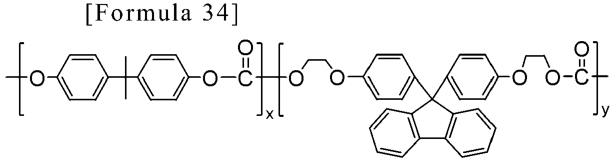

BPEF/BPA = x/y = 65.8/34.2 (mol%)
Mw = 30,000

PC5 was synthesized by the method described in International Publication WO2007/142149.

### (6) PC6: BPEF/BPA

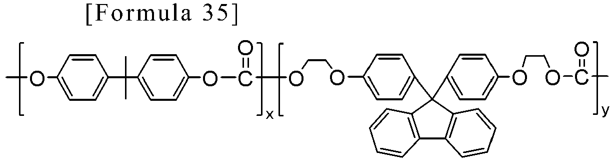

BPEF/BPA = x/y = 13.6/86.4 (mol%)
Mw = 31,000

PC6 was synthesized by the method described in International Publication WO2007/142149.

### (7) PC7: D-NDM/BPEF

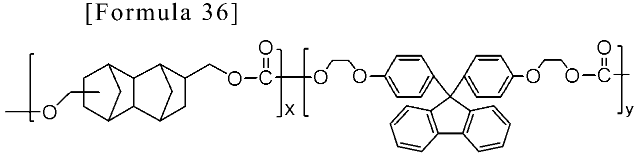

D-NDM/BPEF = x/y = 66/34 (mol%)
Mw = 28,000

PC7 was synthesized by the method described in International Publication WO2016/052370.

### [Example 1-1]

### (1) Vibration transport step

The molding waste products collected from optical material production plants were used as molding waste products herein. Specifically, molding waste products each comprising a sprue part and a runner part, which were discharged after optical lenses had been molded from each of the resins PC1, PC2, PC3, PC4, PC5, PC6 and PC7, were used. Each molding waste product had a structure in which a plastic product 11 was separated from the one-piece product shown in Figure 3. Each molding waste product had an axial sprue part 7 (inner diameter: 4.3 mm, length: 48.1 mm), an eight leg-like (branched structure) runner part 8 (inner diameter: 2.5 mm, length to the branched structure: 12 mm, length of each branched structure part: 9.6 mm) extending evenly from the lower part of the axis to the circumferential direction, a gate part 9 (inner diameter: 1.0 mm), and a cold slug well part 10 (inner diameter: 4.3 mm, length: 6.3 mm) at the end of the sprue part.

The molding waste products were fed into one end side of a conveyor (vibration transport floor, width: 30 cm, length: 1.5 m) that was vibrated at 50 Hz. At this time, 500g of the molding waste products were fed over 10 seconds. After the molding waste products had reached the other end of the vibration transport floor, they were recovered. By the above-described step, the entanglement between the molding waste products could be eliminated, and the untangled molding waste products could be efficiently arranged one by one on the conveyor of the Raman scattering light device for the subsequent separation and recovery step.

### (2) Separation and recovery step

The Raman scattering light device of the aspect shown in Figure 4 was used, the resin type to be identified was set to PC1, and the thus set resin type to be identified was set to be blown with air. The speed of the belt conveyor of this device was set to 20 m/min.

Ten of individual molding waste products were randomly and equidistantly placed on the aforementioned belt conveyor at a speed of 1 piece/second. When the molding waste products were arranged on the belt conveyor, as shown in Figure 6B, the directions of individual molding waste products were all aligned in an inverted T shape, so that the axis part of the sprue part 7 extended upward, and so that the eight leg-like runner parts 8 extending evenly from the lower part of the axis to the circumferential direction were allowed to come into contact with the belt conveyor.

As a result, 100% of all the molded bodies were selected. The operating conditions and the results are shown in Table 1.

### [Examples 1-2 to 1-7]

The same procedures as those in Example 1-1 were carried out with the exception that the operating conditions of the device were changed as shown in Table 1.

As a result, 100% of all the molded bodies were selected. The operating conditions and the results are shown in Table 1.

### [Example 1-8]

The same procedures as those in Example 1-1 were carried out with the exception that 5 out of the ten molding waste products were laid on their sides and were placed on the belt conveyor so that the tip of the sprue part 7 was allowed to come into contact with the belt conveyor. The operating conditions and the results are shown in Table 1.

As a result, the identification success percentage was 50%. The operating conditions and the results are shown in Table 1.

### [Example 2-1 to Example 6-1]

The same procedures as those in Example 1-1 were carried out with the exception that the resin type to be identified was as shown in Table 2.

The operating conditions and the results are shown in Table 2.

### [Example 7-1]

The Raman scattering light device of the aspect shown in Figure 5 was used, the resin type to be identified was set to PC1, and resins other than the identified resin type was set to be blown with air. The speed of the belt conveyor of this device was set to 20 m/min. As molded bodies, sprue and runner parts, which were discharged after optical lenses had been molded from each of the resins PC1, PC2, PC3, PC4, PC5, PC6 and PC7, were used. As in the case of Example 1-1, each molding waste product had a structure in which a plastic product 11 was separated from the one-piece product shown in Figure 3. Each molding waste product had an axial sprue part 7 (inner diameter: 4.3 mm, length: 48.1 mm), an eight leg-like (branched structure) runner part 8 (inner diameter: 2.5 mm, length to the branched structure: 12 mm, length of each branched structure part: 9.6 mm) extending evenly from the lower part of the axis to the circumferential direction, a gate part 9 (inner diameter: 1.0 mm), and a cold slug well part 10 (inner diameter: 4.3 mm, length: 6.3 mm) at the end of the sprue part. Before the separation and recovery step using the Raman scattering light device, the entanglement between the molding waste products were disentangled by carrying out the vibration transport step in the same manner as that of Example 1-1.

Ten of individual molding waste products were randomly and equidistantly placed on the aforementioned belt conveyor at a speed of 1 piece/second. When the molding waste products were arranged on the belt conveyor, as shown in Figure 6B, the directions of individual molding waste products were all aligned in an inverted T shape, so that the axis part of the sprue part 7 extended upward, and so that the eight leg-like runner parts 8 extending evenly from the lower part of the axis to the circumferential direction were allowed to come into contact with the belt conveyor. As a result, 100% of all the molded bodies were selected. The operating conditions and the results are shown in Table 3.

### [Examples 7-2 to 7-6]

The same procedures as those in Example 7-1 were carried out with the exception that the operating conditions of the device were changed as shown in Table 3. As a result, 100% of all the molded bodies were selected. The operating conditions and the results are shown in Table 3.

### [Examples 8-1 to Example 12-1]

The same procedures as those in Example 7-1 were carried out with the exception that the resin type to be identified was as shown in Table 4. As a result, 100% of all the molded bodies were selected. The operating conditions and the results are shown in Table 4.

### [Example 13]

PC-4 recovered in Example 1-1 (i.e., a polycarbonate resin comprising a constituent unit derived from 9,9-bis[4-(2-hydroxyethoxy)phenyl]fluorene (BPEF)) was used, and was subjected to a crushing treatment. After the crushing treatment, the resultant was treated by the same method as in Synthetic Example 2 of WO2015/166951 to produce a recycled resin. Specifically, the recycled resin was produced by the following procedures.

Into a reactor equipped with a stirrer and a cooling tube, 100 parts by weight of the crushed PC4, 88 parts by weight of a 48% sodium hydroxide aqueous solution, and 734 parts by weight of toluene were charged, and the obtained mixture was then reacted under heating and reflux for 3 hours. Thereafter, the liquid temperature was cooled to 80°C to 85°C, and 178 parts by weight of ion-exchanged water was then added thereto. After stirring and leaving at rest, an aqueous phase was separated, and an organic phase was washed with ion-exchanged water. After a portion of the toluene was away from the organic phase, the resultant was filtrated, and 23 parts of ion-exchanged water was added. The obtained mixture was cooled to room temperature, while stirring. The precipitated crystals were filtered and dried to obtain 85 parts by weight of 9,9-bis[4-(2-hydroxyethoxy)phenyl]fluorene (BPEF) in the form of white crystals.

Next, 19.5 kg (44.5 mol) of 9,9-bis[4-(2-hydroxyethoxy)phenyl]fluorene (BPEF), which was obtained above, 9.81 kg (45.8 mol) of diphenyl carbonate, and 2.2 x 10⁻² g (2.7 x 10⁻⁴ mol) of sodium bicarbonate were placed in a 50-L reactor equipped with a stirrer and a distillation apparatus, and were then heated to 215°C under a nitrogen atmosphere of 760 mmHg over 1 hour and were stirred. Thereafter, regarding the degree of pressure reduction, the pressure was adjusted to 150 mmHg over 15 minutes, and the reaction mixture was then retained under conditions of 215°C and 15 mmHg for 20 minutes to carry out a transesterification reaction. Thereafter, the temperature was further increased to 240°C at a rate of 37.5°C/hr, and the reaction mixture was then retained under conditions of 240°C and 150 mmHg for 10 minutes. After that, the pressure was adjusted to 120 mmHg over 10 minutes, and the reaction mixture was then retained under conditions of 240°C and 120 mmHg for 70 minutes. Thereafter, the pressure was adjusted to 100 mmHg over 10 minutes, and the mixture was then retained under conditions of 240°C and 100 mmHg for 10 minutes. Furthermore, the pressure was reduced to 1 mmHg or less over 40 minutes, and a polymerization reaction was carried out under conditions of 240°C and 1 mmHg or less for 10 minutes under stirring. After completion of the reaction, nitrogen was blown into the reactor for pressurization, and the polycarbonate resin generated was pelletized and extracted. The Mw of the obtained polycarbonate resin was 28,000.

As described above, BPEF obtained from the separated and recovered resin was used, and was allowed to react with a carbonic acid diester according to a solution condensation method, so that a recycled resin comprising a constituent unit of PBEF could be produced.

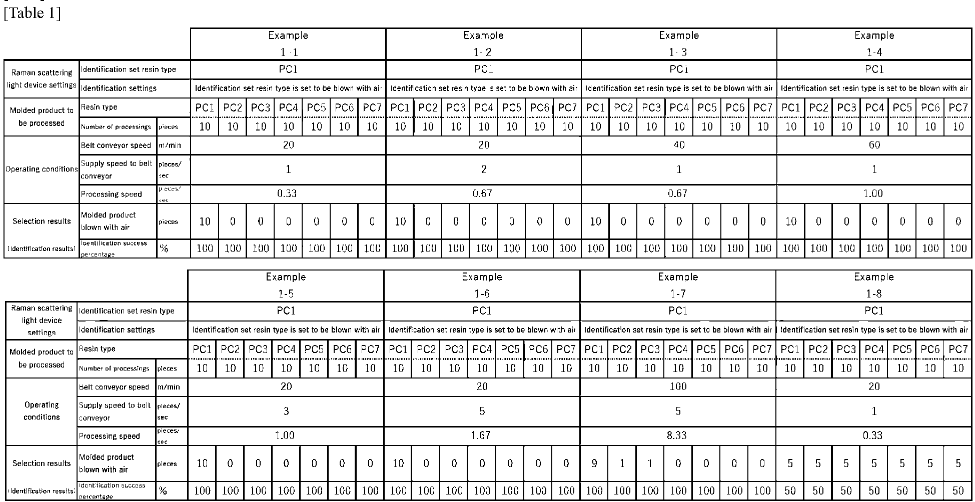

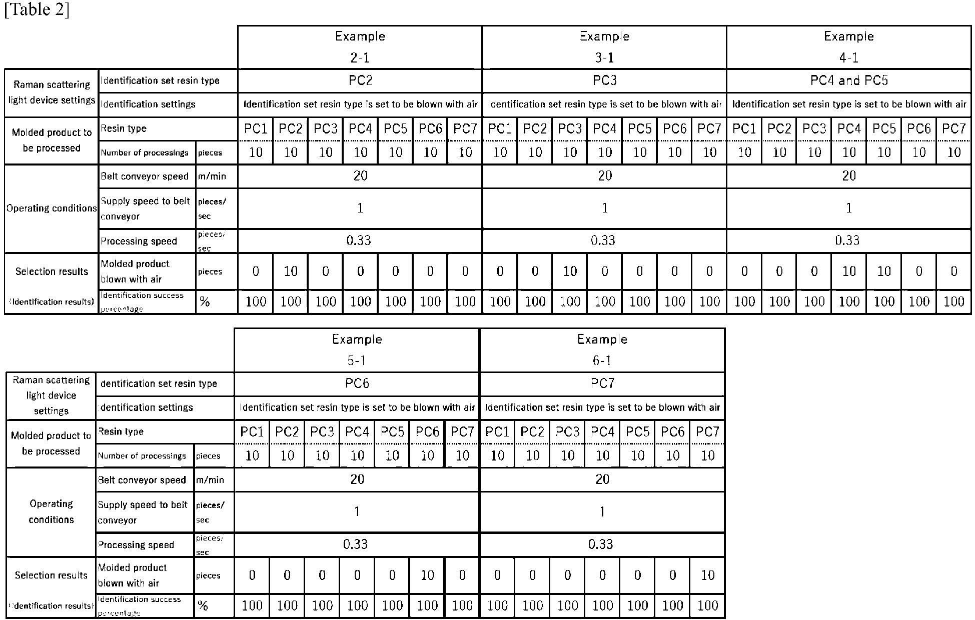

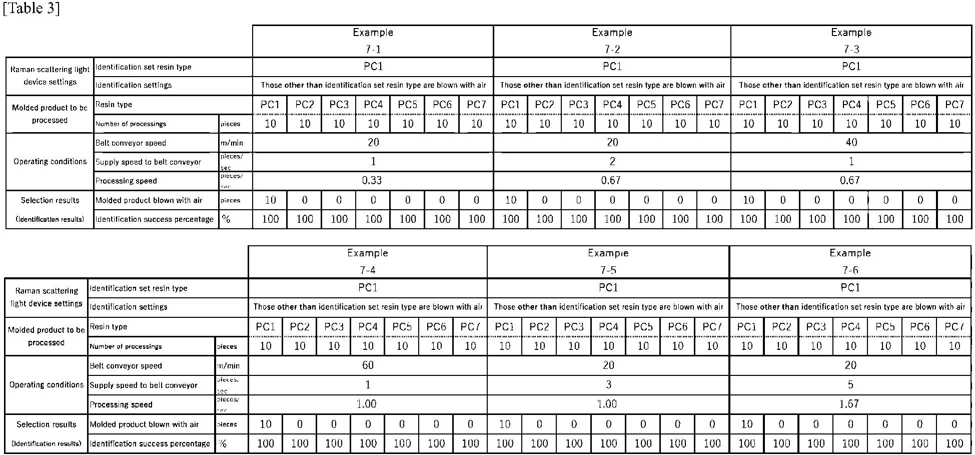

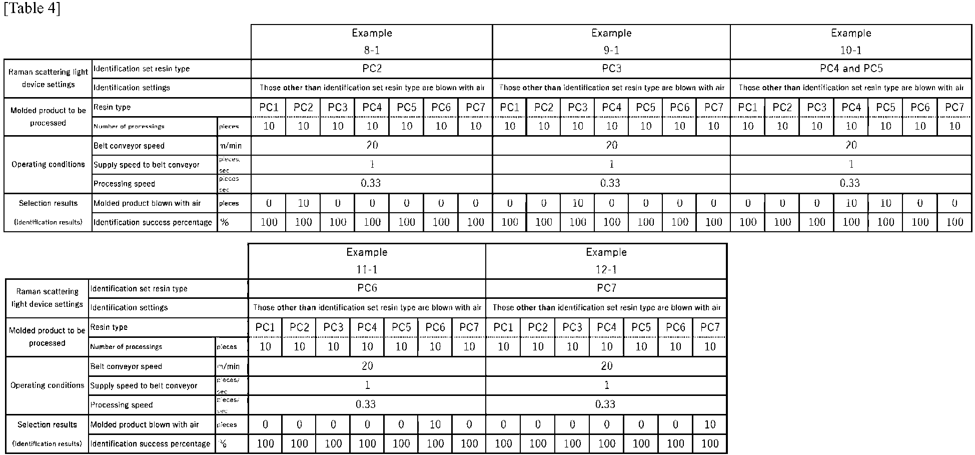

From the results shown in Tables 1 to 4, it was confirmed that, by using a Raman scattering light, the types of thermoplastic resins in molding waste products can be identified and can be efficiently separated and recovered.

When the molding waste products were arranged in aligned orientation so that the tips of the axial sprue parts were facing upward, the identification percentage of the types of thermoplastic resins was high (100%), compared with Examples 1 to 8, in which the tips of the axial sprue parts were arranged so that they were allowed to come into contact with the belt conveyor, and thus, it was confirmed that the accuracy of separation and recovery was improved.

It was demonstrated that the recycled resin produced from the separated and recovered molding waste products has a sufficient molecular weight, and that a high-quality resin can be produced (Example 13).

### Reference Signs List

- 1: Mold
- 2: Sprue
- 3: Runner
- 4: Gate
- 5: Cavity core
- 6,6': Cold slug wells
- 7: Sprue part
- 8: Runner part
- 9: Gate part
- 10,10': Cold slug well parts
- 11: Plastic product
- 12: Molding waste product
- 12a: Molding waste product as a recovery target
- 12b: Molding waste product not as a recovery target
- 13: Raman scattering identification device
- 14: Compressed air
- 15: Recovery container
- 16: Belt conveyor
- 17: Sensor

## Claims

1. A method for producing a recycled resin,
the method comprising:
a step of irradiating a laser light to a molding waste product consisting of a thermoplastic resin, identifying the type of the thermoplastic resin of the molding waste product based on a Raman scattering light scattered from the molding waste product, and separating and recovering the molding waste product; and
a step of obtaining a recycled resin from the separated and recovered molding waste product, wherein
the thermoplastic resin comprises at least one selected from a constituent unit (A) derived from a monomer represented by the following general formula (1), a constituent unit (B) derived from a monomer represented by the following general formula (2), a constituent unit (C) derived from a monomer represented by the following general formula (3), a constituent unit (D) derived from a monomer represented by the following general formula (4), and a constituent unit (E) derived from a monomer represented by the following general formula (5): 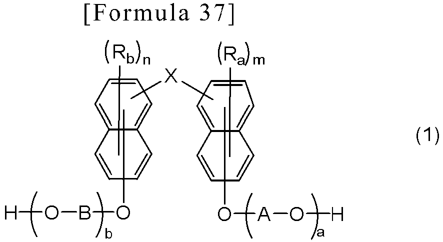
wherein, in the formula (1),
Rₐ and R_{b} are each independently selected from the group consisting of a hydrogen atom, a halogen atom, an alkyl group containing 1 to 20 carbon atoms and optionally being substituted, an alkoxy group containing 1 to 20 carbon atoms and optionally being substituted, a cycloalkyl group containing 5 to 20 carbon atoms and optionally being substituted, a cycloalkoxy group containing 5 to 20 carbon atoms and optionally being substituted, and an aryl group containing 6 to 20 carbon atoms and optionally being substituted, a heteroaryl group containing 3 to 20 carbon atoms and optionally being substituted, which comprises one or more heterocyclic atoms selected from O, N and S, an aryloxy group containing 6 to 20 carbon atoms and optionally being substituted, and - C≡C-Rₕ, wherein
Rₕ represents an aryl group containing 6 to 20 carbon atoms and optionally being substituted, or a heteroaryl group containing 3 to 20 carbon atoms and optionally being substituted, which comprises one or more heterocyclic atoms selected from O, N and S,
X represents a single bond or a fluorene group optionally being substituted,
A and B each independently represent an alkylene group containing 1 to 5 carbon atoms and optionally being substituted,
m and n each independently represent an integer of 0 to 6, and
a and b each independently represent an integer of 0 to 10, 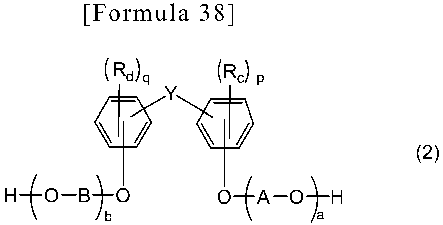
wherein, in the formula (2),
R_{c} and R_{d} are each independently selected from the group consisting of a hydrogen atom, a halogen atom, an alkyl group containing 1 to 20 carbon atoms and optionally being substituted, an alkoxy group containing 1 to 20 carbon atoms and optionally being substituted, a cycloalkyl group containing 5 to 20 carbon atoms and optionally being substituted, a cycloalkoxy group containing 5 to 20 carbon atoms and optionally being substituted, and an aryl group containing 6 to 20 carbon atoms and optionally being substituted,
Y is selected from the group consisting of a single bond, a fluorene group optionally being substituted, -CR₂₁R₂₂-, -S-, -S(=O)-, - (CH₂)ᵣ-, -O-, -(CH₂)ᵣ-(SiR₂₃R₂₄-O)ₛ-SiR₂₃R₂₄-(CH₂)ᵣ-, and -CR₂₅R₂₆-Ph-CR₂₅R₂₆-, wherein
R₂₁, R₂₂, R₂₃, R₂₄, R₂₅ and R₂₆ are each independently represent a hydrogen atom, a halogen atom, an alkyl group containing 1 to 20 carbon atoms and optionally being substituted, or an aryl group containing 6 to 30 carbon atoms and optionally being substituted, or R₆₁ and R₆₂, or R₇₁ and R₇₂ bind to each other to form a carbon ring or heteroring, containing 1 to 20 carbon atoms and optionally being substituted,
Ph represents a phenyl group,
r and s each independently represent an integer of 0 to 5000,
A and B each independently represent an alkylene group containing 1 to 5 carbon atoms and optionally being substituted,
p and q each independently represent an integer of 0 to 4, and
a and b each independently represent an integer of 0 to 10, 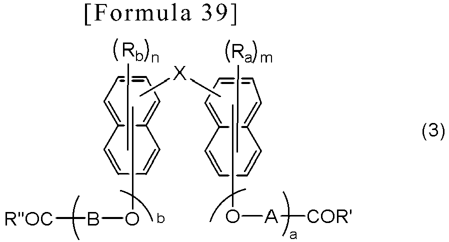
wherein, in the formula (3),
Rₐ and R_{b} are each independently selected from the group consisting of a hydrogen atom, a halogen atom, an alkyl group containing 1 to 20 carbon atoms and optionally being substituted, an alkoxy group containing 1 to 20 carbon atoms and optionally being substituted, a cycloalkyl group containing 5 to 20 carbon atoms and optionally being substituted, a cycloalkoxy group containing 5 to 20 carbon atoms and optionally being substituted, and an aryl group containing 6 to 20 carbon atoms and optionally being substituted, a heteroaryl group containing 3 to 20 carbon atoms and optionally being substituted, which comprises one or more heterocyclic atoms selected from O, N and S, an aryloxy group containing 6 to 20 carbon atoms and optionally being substituted, and - C≡C-Rₕ, wherein
Rₕ represents an aryl group containing 6 to 20 carbon atoms and optionally being substituted, or a heteroaryl group containing 3 to 20 carbon atoms and optionally being substituted, which comprises one or more heterocyclic atoms selected from O, N and S,
X represents a single bond or a fluorene group optionally being substituted,
A and B each independently represent an alkylene group containing 1 to 5 carbon atoms and optionally being substituted,
m and n each independently represent an integer of 0 to 6,
a and b each independently represent an integer of 0 to 10, and
R' and R" are each independently selected from the group consisting of a hydroxy group, a halogen atom, an alkoxy group containing 1 to 20 carbon atoms and optionally being substituted, and an aryloxy group containing 6 to 20 carbon atoms and optionally being substituted, 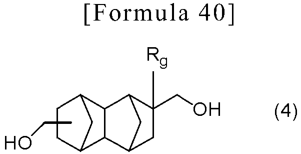
wherein, in the formula (4), R_{g} each independently represents a hydrogen atom or an alkyl group containing 1 to 3 carbon atoms, and 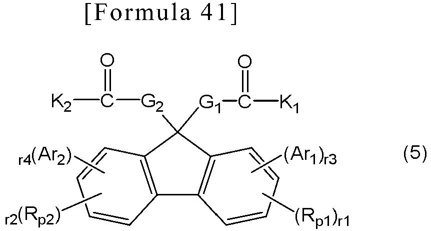
wherein, in the formula (5),
G₁ and G₂ each independently represent an alkylene group containing 1 to 8 carbon atoms and optionally being substituted,
K₁ and K₂ each independently represent a hydroxy group, an alkoxy group or a halogen atom,
Rₚ₁ and Rₚ₂ each independently represent a halogen atom, a cyano group, or an alkyl group containing 1 to 8 carbon atoms and optionally being substituted,
Ar₁ and Ar₂ each independently represent a phenyl group or a naphthyl group, which may optionally be substituted,
r₁ and r₂ each independently represent an integer of 0 to 2, and
r₃ and r₄ each independently represent an integer of 0 or 1.

2. The production method according to claim 1, wherein the thermoplastic resin comprises at least one selected from the group consisting of the constituent unit (A) derived from the monomer represented by the above general formula (1), the constituent unit (B) derived from the monomer represented by the above general formula (2), the constituent unit (C) derived from the monomer represented by the above general formula (3), and the constituent unit (D) derived from the monomer represented by the above general formula (4).

3. The production method according to claim 2, wherein the thermoplastic resin is selected from the group consisting of a resin consisting of the above constituent unit (A) and the above constituent unit (B), a resin consisting of the above constituent unit (B) and the above constituent unit (C), a resin consisting of the above constituent unit (B) and the above constituent unit (D), a resin consisting of the above constituent unit (A), a resin consisting of the above constituent unit (B), a resin consisting of the above constituent unit (C), and a resin consisting of the above constituent unit (D).

4. The production method according to claim 2, wherein the thermoplastic resin is represented by any of the following formula (1-1), (I-2), (I-3), (II-1), (II-2), (II-3), (II-4), (II-5), or (II-6): 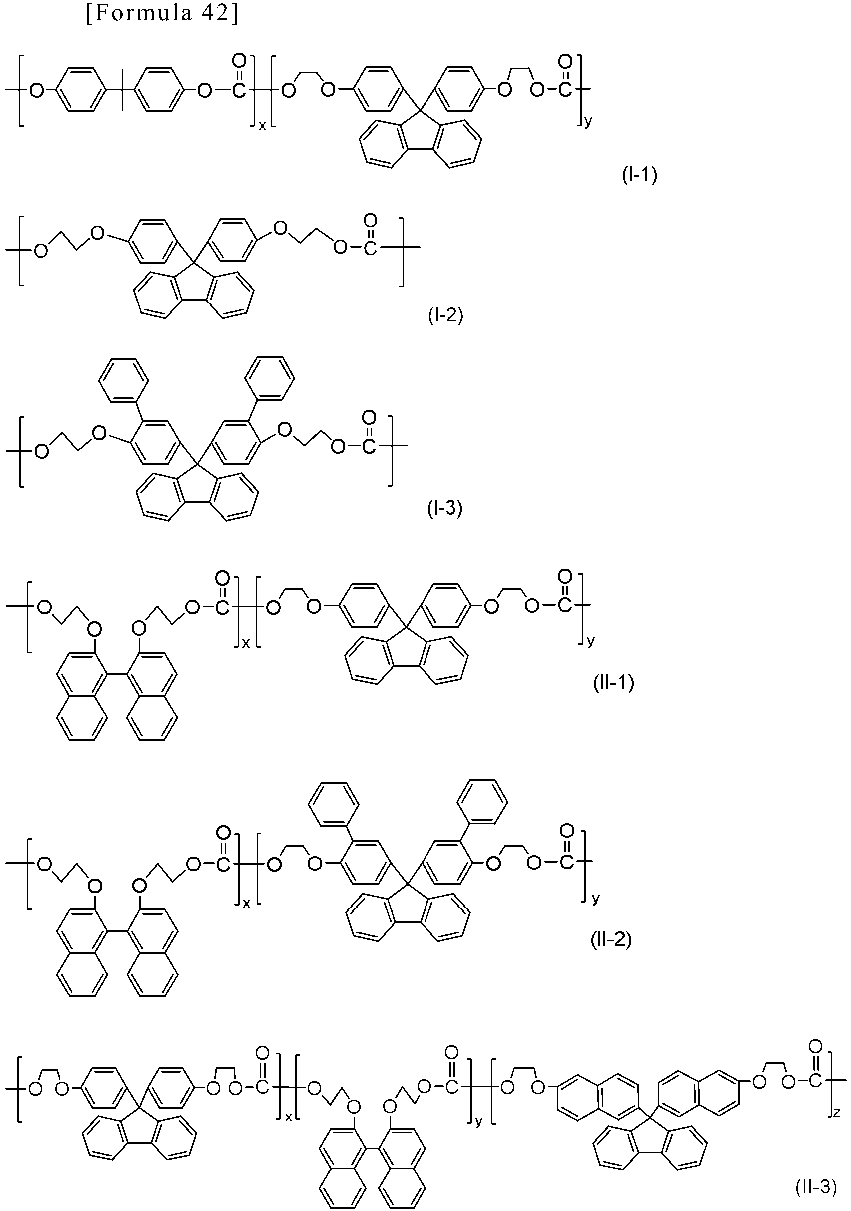 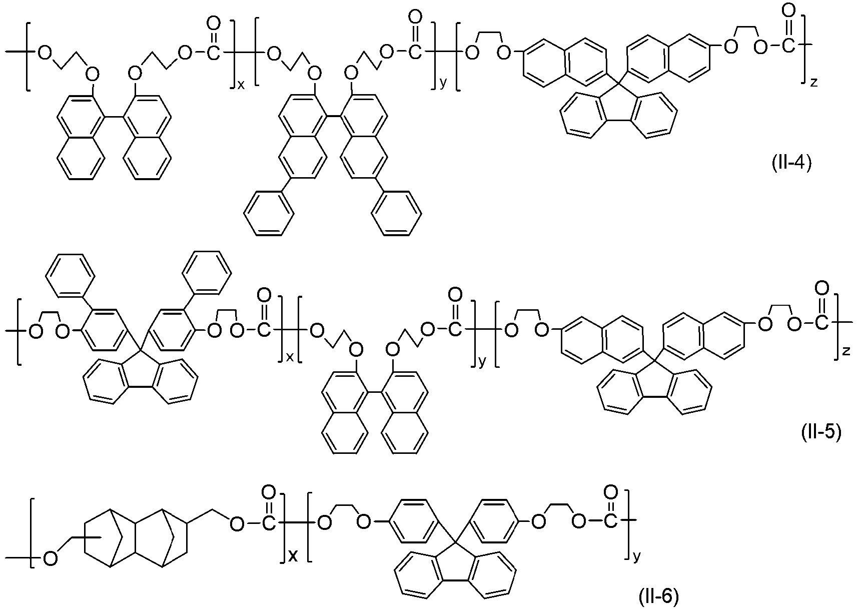 wherein x, y, and z each represent the number of repeating units.

5. The production method according to claim 1, wherein
the thermoplastic resin is selected from the group consisting of:
(III-1) a resin comprising a constituent unit represented by the following formula (iii-a1), a constituent unit represented by the following formula (iii-a2), a constituent unit represented by the following formula (iii-a3), and a constituent unit represented by the following formula (iii-a4);
(III-2) a resin comprising a constituent unit represented by the following formula (iii-a1), a constituent unit represented by the following formula (iii-a2), a constituent unit represented by the following formula (iii-a4), and a constituent unit represented by the following formula (iii-a5); and
(III-3) a resin comprising a constituent unit represented by the following formula (iii-a1), a constituent unit represented by the following formula (iii-a4), and a constituent unit represented by the following formula (iii-a6):

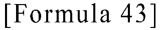

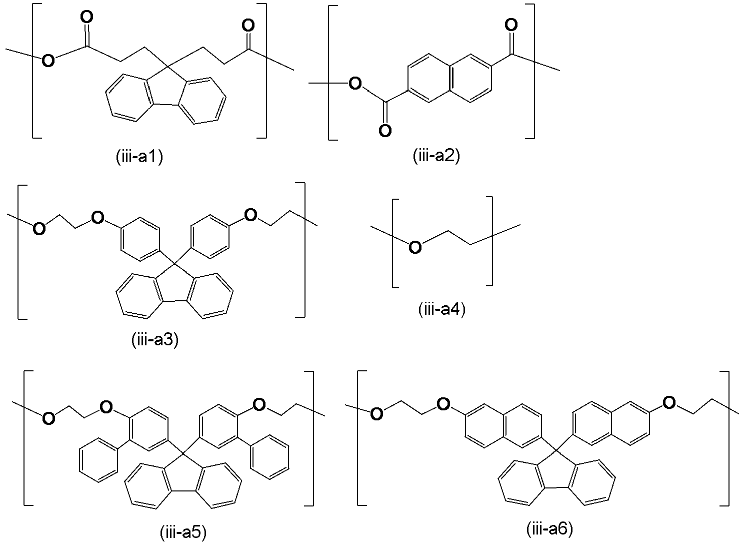

6. The production method according to any one of claims 1 to 5, wherein the molding waste product comprises a sprue part and/or a runner part discharged after molding an optical material.

7. The production method according to any one of claims 1 to 6, wherein the separation and recovery step is continuously carried out on a conveyor, and the molding waste product is supplied onto the conveyor at a speed of 0.5 to 5 pieces/second.

8. The production method according to any one of claims 1 to 7, wherein
the separation and recovery step comprises:
collecting the molding waste product to be recovered by spraying compressed air, and/or
removing the molding waste product not to be recovered by spraying compressed air.

9. The production method according to any one of claims 1 to 8, comprising a step of supplying a waste composition containing the molding waste product to a vibration transport floor, and vibration-transporting the waste composition.

10. The production method according to claim 9, comprising a step of supplying the molding waste products onto the conveyor at equal intervals in the separation and recovery step.

11. The production method according to claim 10, wherein
the molding waste product comprises an axial sprue part and two or more runner parts that extend evenly from the lower portion of the axis in the circumferential direction, and
the molding waste products are arranged in aligned orientation, so that the tips of the axial sprue parts face upward.

12. A method for separating and recovering a molding waste product,
wherein the method comprises:
a step of irradiating a laser light to a molding waste product consisting of a thermoplastic resin, identifying the type of the thermoplastic resin of the molding waste product based on a Raman scattering light scattered from the molding waste product, and separating and recovering the molding waste product, wherein
the thermoplastic resin comprises at least one selected from a constituent unit (A) derived from a monomer represented by the following general formula (1), a constituent unit (B) derived from a monomer represented by the following general formula (2), a constituent unit (C) derived from a monomer represented by the following general formula (3), a constituent unit (D) derived from a monomer represented by the following general formula (4), and a constituent unit (E) derived from a monomer represented by the following general formula (5): 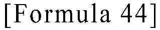 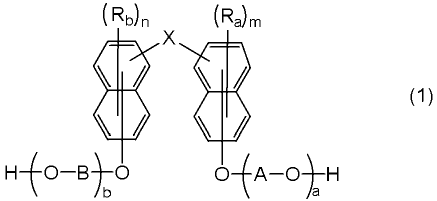
wherein, in the formula (1),
Rₐ and R_{b} are each independently selected from the group consisting of a hydrogen atom, a halogen atom, an alkyl group containing 1 to 20 carbon atoms and optionally being substituted, an alkoxy group containing 1 to 20 carbon atoms and optionally being substituted, a cycloalkyl group containing 5 to 20 carbon atoms and optionally being substituted, a cycloalkoxy group containing 5 to 20 carbon atoms and optionally being substituted, and an aryl group containing 6 to 20 carbon atoms and optionally being substituted, a heteroaryl group containing 3 to 20 carbon atoms and optionally being substituted, which comprises one or more heterocyclic atoms selected from O, N and S, an aryloxy group containing 6 to 20 carbon atoms and optionally being substituted, and - C≡C-Rₕ, wherein
Rₕ represents an aryl group containing 6 to 20 carbon atoms and optionally being substituted, or a heteroaryl group containing 3 to 20 carbon atoms and optionally being substituted, which comprises one or more heterocyclic atoms selected from O, N and S,
X represents a single bond or a fluorene group optionally being substituted,
A and B each independently represent an alkylene group containing 1 to 5 carbon atoms and optionally being substituted,
m and n each independently represent an integer of 0 to 6, and
a and b each independently represent an integer of 0 to 10, 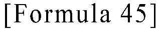 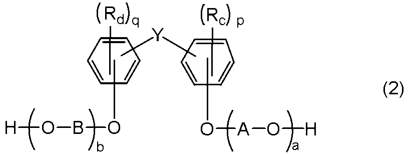
wherein, in the formula (2),
R_{c} and R_{d} are each independently selected from the group consisting of a hydrogen atom, a halogen atom, an alkyl group containing 1 to 20 carbon atoms and optionally being substituted, an alkoxy group containing 1 to 20 carbon atoms and optionally being substituted, a cycloalkyl group containing 5 to 20 carbon atoms and optionally being substituted, a cycloalkoxy group containing 5 to 20 carbon atoms and optionally being substituted, and an aryl group containing 6 to 20 carbon atoms and optionally being substituted,
Y is selected from the group consisting of a single bond, a fluorene group optionally being substituted, -CR₂₁R₂₂-, -S-, -S(=O)-, - (CH₂)ᵣ-, -O-, -(CH₂)ᵣ-(SiR₂₃R₂₄-O),-SiR₂₃R₂₄-(CH₂)ᵣ-, and -CR₂₅R₂₆-Ph-CR₂₅R₂₆-, wherein
R₂₁, R₂₂, R₂₃, R₂₄, R₂₅ and R₂₆ are each independently represent a hydrogen atom, a halogen atom, an alkyl group containing 1 to 20 carbon atoms and optionally being substituted, or an aryl group containing 6 to 30 carbon atoms and optionally being substituted, or R₆₁ and R₆₂, or R₇₁ and R₇₂ bind to each other to form a carbon ring or heteroring, containing 1 to 20 carbon atoms and optionally being substituted,
Ph represents a phenyl group,
r and s each independently represent an integer of 0 to 5000,
A and B each independently represent an alkylene group containing 1 to 5 carbon atoms and optionally being substituted,
p and q each independently represent an integer of 0 to 4, and
a and b each independently represent an integer of 0 to 10, 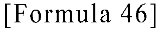 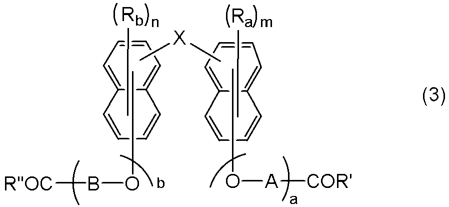
wherein, in the formula (3),
Rₐ and R_{b} are each independently selected from the group consisting of a hydrogen atom, a halogen atom, an alkyl group containing 1 to 20 carbon atoms and optionally being substituted, an alkoxy group containing 1 to 20 carbon atoms and optionally being substituted, a cycloalkyl group containing 5 to 20 carbon atoms and optionally being substituted, a cycloalkoxy group containing 5 to 20 carbon atoms and optionally being substituted, and an aryl group containing 6 to 20 carbon atoms and optionally being substituted, a heteroaryl group containing 3 to 20 carbon atoms and optionally being substituted, which comprises one or more heterocyclic atoms selected from O, N and S, an aryloxy group containing 6 to 20 carbon atoms and optionally being substituted, and - C≡C-Rₕ, wherein
Rₕ represents an aryl group containing 6 to 20 carbon atoms and optionally being substituted, or a heteroaryl group containing 3 to 20 carbon atoms and optionally being substituted, which comprises one or more heterocyclic atoms selected from O, N and S,
X represents a single bond or a fluorene group optionally being substituted,
A and B each independently represent an alkylene group containing 1 to 5 carbon atoms and optionally being substituted,
m and n each independently represent an integer of 0 to 6,
a and b each independently represent an integer of 0 to 10, and
R' and R" are each independently selected from the group consisting of a hydroxy group, a halogen atom, an alkoxy group containing 1 to 20 carbon atoms and optionally being substituted, and an aryloxy group containing 6 to 20 carbon atoms and optionally being substituted, 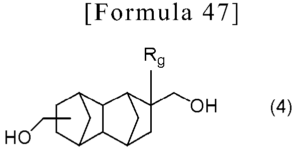
wherein, in the formula (4), R_{g} each independently represents a hydrogen atom or an alkyl group containing 1 to 3 carbon atoms, and 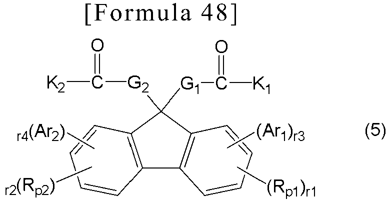
wherein, in the formula (5),
G₁ and G₂ each independently represent an alkylene group containing 1 to 8 carbon atoms and optionally being substituted,
K₁ and K₂ each independently represent a hydroxy group, an alkoxy group or a halogen atom,
Rₚ₁ and Rₚ₂ each independently represent a halogen atom, a cyano group, or an alkyl group containing 1 to 8 carbon atoms and optionally being substituted,
Ar₁ and Ar₂ each independently represent a phenyl group or a naphthyl group, which may optionally be substituted,
r₁ and r₂ each independently represent an integer of 0 to 2, and
r₃ and r₄ each independently represent an integer of 0 or 1.

13. The separation and recovery method according to claim 12, wherein
the thermoplastic resin comprises at least one selected from the group consisting of the constituent unit (A) derived from the monomer represented by the above general formula (1), the constituent unit (B) derived from the monomer represented by the above general formula (2), the constituent unit (C) derived from the monomer represented by the above general formula (3), and the constituent unit (D) derived from the monomer represented by the above general formula (4).
